# EUROPÄISCHE PATENTSCHRIFT

(11) **EP 2 311 671 B1**
(45) Veröffentlichungstag und Bekanntmachung des Hinweises auf die Patenterteilung: **19.11.2014**
(21) Anmeldenummer: 10186369.4
(22) Anmeldetag: 04.10.2010
(51) Int. Cl.: B60G 17/052, B60T 17/02, B60T 15/02, B60T 13/68, F15B 13/02, F16B 21/02, F16B 21/04, F16B 21/06

(54) **Ventil für eine Druckluftanlage eines Nutzfahrzeugs**
Valve for a pressurised air assembly of a commercial vehicle
Soupape pour une installation à air comprimé d'un véhicule utilitaire

(30) Priorität: 15.10.2009 DE 102009045734
(43) Veröffentlichungstag der Anmeldung: 20.04.2011
(73) Patentinhaber: Haldex Brake Products GmbH, 69123 Heidelberg (DE)
(72) Erfinder: Becke, Stefan, 68804, Altlussheim (DE); Engel, Georg, 69181, Leimen (DE)
(74) Vertreter: REHBERG HÜPPE + PARTNER

(56) Entgegenhaltungen:
- EP-B1- 0 830 958
- CN-Y- 201 083 216
- DE-B3-102004 050 194
- DE-C1- 4 416 280
- DE-C1- 19 636 946
- DE-C5- 19 923 456
- US-A- 4 428 496
- US-A1- 2009 014 679

## Beschreibung

### TECHNISCHES GEBIET DER ERFINDUNG

Die Erfindung betrifft ein Ventil in Schieberbauart für eine Druckluftanlage eines Nutzfahrzeugs. Insbesondere handelt es sich bei dem Ventil um ein Liftachsventil oder ein Hebe-Senk-Ventil in Schieberbauart.

### STAND DER TECHNIK

Ventile für eine Druckluftanlage eines Nutzfahrzeugs wie ein Liftachsventil oder ein Hebe-Senk-Ventil sind großen pneumatischen Drücken ausgesetzt, so dass diese auf Drücke von beispielsweise 8,5 bar, 12,5 bar, 15 bar oder 20 bar auszulegen sind. Im Folgenden wird beispielhaft der Stand der Technik sowie auch die Erfindung anhand eines Liftachsventils beschrieben, wobei vielfältigerer Stand der Technik zu anderweitigen Ventilen für eine Druckluftanlage eines Nutzfahrzeugs, beispielsweise einem Hebe-Senk-Ventil, in Schieberbauart bekannt sind und die Erfindung auch derartige anderweitige beliebige Ventile in Schieberbauart umfasst.

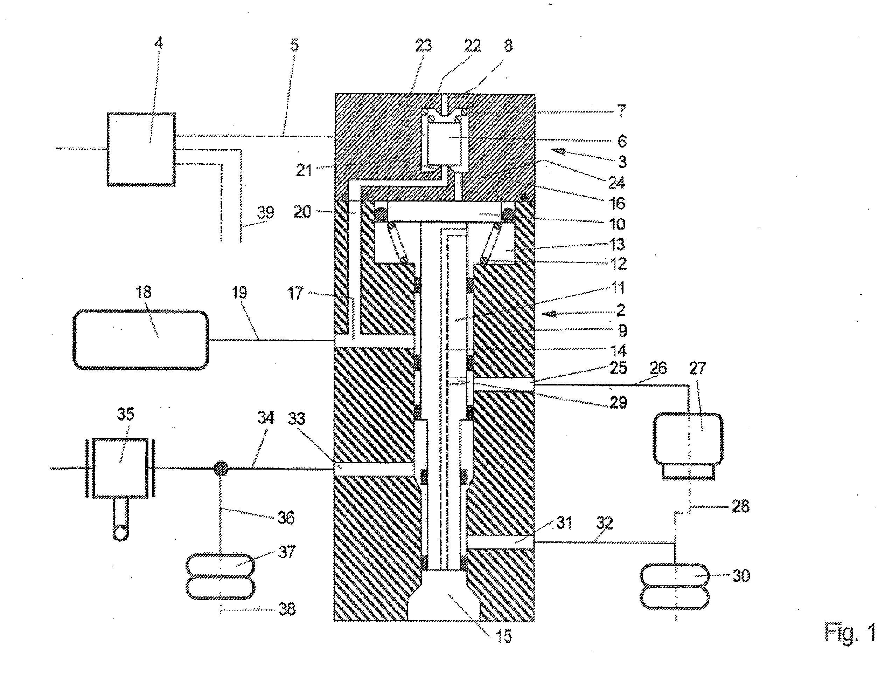

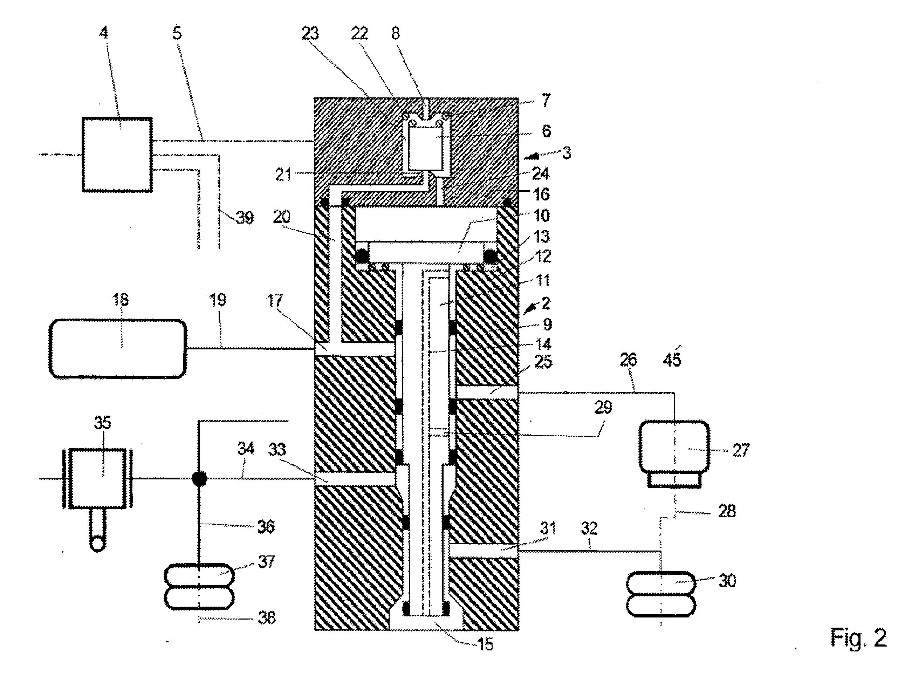

Eine Anlage für Kraftfahrzeuge mit Luftfederung und einem Liftachsventil ist aus dem **Prospekt der Anmelderin** mit der Bezeichnung "EINBAUHINWEISE ILAS-E" mit dem Veröffentlichungshinweis 009 352 061 St. 1/TS/09.00 Heidelberg bekannt. Eine ähnliche Anlage ist auch in den Fig. 1 und 2 wiedergegeben. Die Anlage weist eine auf Tragbälgen abgestützte Tragachse und eine auf Federbälgen abgestützte Liftachse auf. Die Liftachse besitzt darüber hinaus einen Liftbalg, mit dem sie heb- und senkbar ausgebildet ist. Zu der Anlage gehört ein Liftachsventil, welches hier als 5/2-Wegeventil ausgebildet ist. Das Liftachsventil weist in einem Gehäuse einen Steuerkolben auf, der gegen die Kraft einer Feder im Gehäuse verschiebbar ausgebildet ist. Mit dem Steuerkolben ist eine Kolbenstange verbunden, die nach Schieberbauart eine Reihe von Dichtungen trägt, um damit verbundene Leitungen aneinander anzuschließen bzw. gegeneinander abzuschließen oder zu entlüften. In der durch die Feder herbeigeführten Stellung des Steuerkolbens, bei der also der Steuerraum nicht belüftet ist, ist der Liftbalg der Liftachse entlüftet, was ein Absenken der Liftachse zur Folge hat. Dies entspricht dem Sicherheitsgedanken, dass bei Ausfall der elektrischen Versorgung der sichere Zustand, also eine abgesenkte Liftachse, erreicht werden soll. In dieser Stellung sind andererseits die Tragbälge der Tragachse mit den Federbälgen der Liftachse verbunden, so dass über ein vorgeschaltetes Niveauregelventil der der Beladung des betreffenden Fahrzeugs entsprechende Druck übereinstimmend in die Tragbälge und die Federbälge eingesteuert wird. Das eingesetzte Liftachsventil ist elektrisch über ein Magnetventil ansteuerbar. Zu diesem Zweck besitzt das Magnetventil des Liftachsventils eine Verbindung zum Vorratsbehälter, so dass es mit Druckluft aus dem Vorratsbehälter versorgt wird. Das Magnetventil besitzt einen eigenen Entlüftungsanschluss und ist so ausgebildet und angeordnet, dass es im nicht erregten Zustand durch die Kraft einer Feder den Vorratsanschluss absperrt und den Steuerraum des Steuerkolbens entlüftet. Das Magnetventil reagiert auf ein elektrisches Signal, so dass das Achsliftventil infolge dieses elektrischen Signals über das Magnetventil elektrisch umschaltbar ist. Dies entspricht der allgemeinen Entwicklungsrichtung von Ventilen für Kraftfahrzeuge, bei denen über eine EBS, eine ABS oder eine sonstige ECU elektrische Signale erzeugt, verarbeitet und weitergeleitet werden, um entsprechende Schaltzustände zu erreichen.

EP 0 830 958 B1 offenbart ein Liftachsventil in Schieberbauart, bei welchem ein Innenraum eines metallischen Gehäuses mit einer Bohrung gebildet ist, so dass dieser durch eine zylinderförmige Innenfläche begrenzt ist. Steuerkanten eines Steuerschiebers mit Dichtelementen gleiten entlang dieser zylindrischen Innenfläche zur Herbeiführung unterschiedlicher Betriebsstellungen des Schieberventils. Der Innenraum geht über eine Stufe über zu einer weiteren zylinderförmigen Innenfläche des Gehäuses mit vergrößertem Durchmesser. Hier ist in den Innenraum eine Hülse eingesetzt, die in der Druckschrift als Einsatzkörper bezeichnet ist. Eine Abdichtung des Einsatzkörpers gegenüber der zylindrischen Innenfläche erfolgt über drei radiale Dichtungen, zwischen denen Bohrungen die Hülse radial durchsetzen, über welche zwischen dem Steuerschieber und dem Einsatzkörper gebildete, durch die Dichtungen axial abgeschlossene Steuerräume mit Anschlüssen des Gehäuses verbindbar sind.

DE 44 16 280 C1 betrifft ein Niveauregelventil mit einem zweiteiligen Spritzguss-Gehäuse aus Kunststoff. DE 199 23 456 C5 offenbart den Einsatz eines faserverstärkten Polyamid-Kunststoffs für ein Gehäuse eines Niveauregelventils. Weiterer Stand der Technik betreffend eines als Liftachsventil ausgebildeten Ventils in Schieberbauweise ist aus DE 10 2004 050 194 B3 bekannt.

### AUFGABE DER ERFINDUNG

Der vorliegenden Erfindung liegt die Aufgabe zugrunde, ein Ventil, insbesondere ein Liftachsventil oder eine Hebe-Senk-Ventil, für ein Kraftfahrzeug vorzuschlagen, welches hinsichtlich der Herstellung und/oder Montage und Demontage vereinfacht ist, geringere Materialkosten besitzt und/oder ein geringeres Gewicht besitzt.

### LÖSUNG

Die Aufgabe der Erfindung wird erfindungsgemäß mit den Merkmalen des unabhängigen Patentanspruchs 1 gelöst. Weitere Ausgestaltungen eines erfindungsgemäßen Ventils ergeben sich aus den abhängigen Patentansprüchen 2 bis 18.

### BESCHREIBUNG DER ERFINDUNG

Herkömmlich werden Gehäuse für Ventile für eine Druckluftanlage eines Nutzfahrzeugs aus Metall, insbesondere Stahl oder Aluminium, hergestellt. Möglich ist, dass derartige Gehäuse aus einem Vollmaterial gefertigt werden, wobei mit einem verbundenen hohen Materialeinsatz und Fertigungsaufwand durch spannende Bearbeitung aus einem großvolumigen Halbzeug ein möglichst kleinvolumiges Gehäuse herausgearbeitet wird. Alternativ handelt es sich bei den eingesetzten Gehäusen aus metallischen Gussgehäusen. Obwohl eine Fertigung von Gehäusen abweichend hierzu aus Kunststoff in anderweitigen Fachgebieten bereits seit vielen Jahren bekannt ist, schlägt die Erfindung erstmals vor, dass ein Gehäuse eines Ventils für eine Druckluftanlage eines Nutzfahrzeugs mit Kunststoff gebildet ist. Hierbei kann für die Herstellung des Gehäuses insbesondere ein Kunststoff-Spritzgießverfahren Einsatz finden.

Die vorliegende Erfindung tritt dem Vorurteil des Fachmanns entgegen, dass das druckführende Ventil zur Gewährleistung der mechanischen Festigkeit aus Metall gebildet sein muss. Weiterhin hat die Erfindung überraschend festgestellt, dass eine Fertigung des Ventils mit etwaigen Anschlüssen, Entlüftungen, Steuer-, Kolben- und Übertrittskammern, Kanälen und zugeordneten Bauelementen in einem Herstellungsverfahren für Kunststoff, insbesondere in einem Spritzgießverfahren, möglich ist.

Andererseits berücksichtigt die Erfindung, dass das Gehäuse des Ventils, welches mit Kunststoff gebildet ist, vorteilhaft auch über den gesamten Temperaturbereich, welchem ein Kraftfahrzeug ausgesetzt ist, beispielsweise mit Temperaturänderungen von minus 40 °C bis zu plus 80 °C, eingesetzt werden kann, ohne dass sich ein Materialversagen, beispielsweise infolge einer Rissbildung, Versprödung des Kunststoffs oder ähnliches ergibt oder funktionale Beeinträchtigungen, beispielsweise infolge von unterschiedlichen Wärmedehnungen von Funktionsflächen benachbarter Bauelemente mit engen Toleranzen, zu erwarten sind.

Während der Fachmann vor dem Anmeldetag der vorliegenden Erfindung davon ausgegangen ist, dass ein Steuerschieber eines Ventils in Schieberbauweise in einem Innenraum mit zylinderförmiger Innenfläche bewegt werden muss, hat die Erfindung weiterhin erkannt, dass in dem erfindungsgemäßen Ventil auch ein Innenraum mit einer kegelstumpfförmigen Innenfläche Einsatz finden kann. Dies hat beispielsweise zur Folge, dass der Innenraum und die kegelstumpfförmige Innenfläche in das Gehäuse aus Kunststoff über einen zumindest teilweise kegelstumpfförmigen Kern eingeformt werden können, was eine bedeutende Vereinfachung der Fertigung darstellen kann. Bei vergleichbarer Fertigung eines Innenraumes mit zylinderförmiger Innenfläche abweichend zur vorliegenden Erfindung wäre ein Entformen eines dann zylindrischen Kerns nur möglich, wenn in diesem Bereich das Gehäuse mit einer Teilungsebene geteilt wäre, welche durch die Längsachse des Ventils verläuft. Hingegen kann bei Einsatz der kegelstumpfförmigen Innenfläche ein Entformen erfolgen, indem ein kegelstumpfförmiger Kern einfach aus dem Gehäuse nach dem Erstarren des Materials herausgezogen wird. Ein derartiges Gehäuse ist auch vorteilhaft, da für die u. U. nicht geteilte Ausbildung des Gehäuses zumindest im Bereich der kegelstumpfförmigen Innenfläche die Montage vereinfacht ist und eine Trennfuge im Bereich der Teilungsebene, die die Funktion des Ventils beeinträchtigen könnte und unter Umständen zusätzliche Dichtungsmaßnahmen erfordert, vermieden ist.

Weiterhin hat die Erfindung erkannt, dass die unmittelbare Wechselwirkung zwischen der kegelstumpfförmigen Innenfläche und dem Steuerschieber nicht funktionsgerecht ist, da dieses Dichtprobleme insbesondere im Bereich der Steuerkanten begründen könnte und/oder infolge der veränderlichen Anpresskraft zwischen Innenfläche und Dichtelement im Bereich einer Steuerkante zu einem erhöhten Verschleiß führen könnte.

Erfindungsgemäß wird in den Innenraum mit kegelstumpfförmiger Innenfläche zumindest eine Hülse eingesetzt. Die Hülse bildet oder begrenzt radial innenliegend einen Steuerraum, der über mindestens eine radiale Durchgangsausnehmung der Hülse mit mindestens einem radial außenliegend von der Hülse angeordneten Anschluss oder einer Entlüftung verbunden ist. Damit kann die Hülse die Fläche bereitstellen, die in Wechselwirkung mit dem Steuerelement und zugeordneten Dichtelementen tritt. Möglich ist, dass eine Hülse im Rahmen der Erfindung eingesetzt wird entsprechend dem Einsatzkörper gemäß EP 0 830 958 B1, die somit für mehrere unterschiedliche Anschlüsse und Steuerräume zuständig ist. Ebenfalls möglich ist, dass mehrere Hülsen Einsatz finden, die baugleich sein können oder unterschiedlich ausgebildet sind, beispielsweise mit gleichen Durchmessern, aber unterschiedlichen axialen Erstreckungen oder unterschiedlichen Durchmessern und axialen Erstreckungen. Infolge der kegelstumpfförmigen Innenfläche, innerhalb welcher mindestens eine Hülse angeordnet ist, ergibt sich radial außenliegend von der mindestens einen Hülse ein Spalt, der beispielsweise in Umfangsrichtung umlaufend ausgebildet ist, der in Richtung der Längsachse des Steuerschiebers aber eine veränderliche Spalthöhe ausbildet.

Um trotz der veränderlichen Spalthöhe zwischen Hülse und kegelstumpfförmiger Innenfläche die Funktion des Ventils in Schieberbauart gewährleisten zu können, sind an den Stirnseiten der mindestens einen Hülse baugleiche Dichtelemente abgestützt. Diese treten radial innenliegend mit dem Steuerschieber in Wechselwirkung zur Abdichtung benachbarter Steuerräume in ausgewählten Stellungen des Steuerschiebers, während in anderen Stellungen des Steuerschiebers eine Verbindung zwischen den benachbarten Steuerräumen vorbei an den Dichtelementen geschaffen ist, beispielsweise durch geeignete Übertrittsnuten in dem Steuerschieber.

Auch wenn baugleiche Dichtelemente eingesetzt werden, bewerkstelligen diese Dichtelemente radial außenliegend eine Abdichtung gegenüber der kegelstumpfförmigen Innenfläche des Gehäuses. Hierbei erfolgt eine Auslegung der Elastizität der Dichtelemente (und die Wahl der Geometrie derselben) derart, dass Durchmesserunterschiede infolge des Öffnungswickels des Kegelstumpfes ausgeglichen werden. Dadurch, dass nicht für unterschiedliche Durchmesser unterschiedliche Dichtelemente eingesetzt werden müssen, was eine sorgfältige Auswahl während der Montage des Ventils erfordern würde, kann die Bauteilvielfalt reduziert werden und die Montage vereinfacht werden.

Letztendlich ermöglicht die erfindungsgemäße Ausgestaltung die Ausbildung des Gehäuses zumindest teilweise mit Kunststoff bei einfacher Fertigungsmöglichkeit des Gehäuses mit Einsatz eines kegelstumpfförmigen Kerns und Einsatz einer "Hülsentechnik" zur Bildung eines Steuerschiebers.

In weiterer Ausgestaltung der Erfindung finden in dem Ventil zwei oder mehr Hülsen Einsatz, die gleiche Durchmesser besitzen. Zwischen die zwei oder mehr Hülsen ist (jeweils) ein Dichtelement zwischengeordnet, wobei zwischengeordnete Dichtelemente und die an den Stirnseiten abgestützten Dichtelemente baugleich ausgebildet sind. In diesem Fall besitzt die kegelstumpfförmige Innenfläche eine Erstreckung in Richtung der Längsachse, die größer ist als die Summe der Erstreckungen der Hülsen in Richtung der Längsachse. Auf diese Weise ist ermöglicht, dass auch die Ausbildung eines Mehr-Wege-Ventils und/oder Mehr-Stellungs-Ventils möglich ist mit Einsatz des Gehäuses aus Kunststoff und Fertigung desselben mit einer kegelstumpfförmigen Innenfläche bei Fertigung durch einen kegelstumpfförmigen Kern.

Gemäß einem weiteren Vorschlag der Erfindung kann die Bauteilvielfalt weiter verringert werden, indem in dem erfindungsgemäßen Ventil zwei oder mehr baugleiche Hülsen eingesetzt werden.

Als Kunststoff für das Gehäuse kann ein beliebiges Kunststoffmaterial ausgewählt werden, welches beispielsweise hinsichtlich der mechanischen Eigenschaften, der Beständigkeit bei Aussetzung mit den durch das Ventil hindurchgeleiteten, unter Umständen kontaminierten Fluiden, der Beaufschlagung der Außenfläche, beispielsweise mit Schmutz, der auf das Ventil wirkenden Vibrationen und ähnlichem ausgewählt ist. Hierbei kann das Gehäuse oder können Gehäuseteile ausschließlich aus Kunststoff bestehen. Ebenfalls möglich ist der Einsatz eines mit Kunststoff gebildeten Verbundkörpers. Um lediglich einige Beispiele zu nennen können Hülsen aus einem anderen Material, beispielsweise Metall, in den Kunststoff eingegossen sein, wo diese dann Funktionsflächen bilden. Ebenfalls möglich ist das Eingießen von Hülsen, die dann für ein Hindurchführen von Befestigungsbolzen oder bei Ausstattung derselben mit einem Gewinde für ein Verschrauben mit Befestigungsschrauben genutzt werden können.

Gemäß einem besonderen Vorschlag der Erfindung ist der Kunststoff, mit dem das Gehäuse oder Teile des Gehäuses gebildet sind, mit Fasern verstärkt. Bei diesen Fasern kann es sich um Fasern beliebiger Länge und eines beliebigen Materials handeln. Als besonders effektiv hat sich der Einsatz von Glasfasern in dem Kunststoff herausgestellt. Über u. U. auch kurze Glasfasern kann eine gezielte Beeinflussung der mechanischen Eigenschaften des derart verstärkten Kunststoffes erfolgen, wobei konstruktiv zu diesem Zweck die Dichte, Länge und/oder Orientierung der Glasfaser vorgegeben werden kann. Hierbei hat die Erfindung erkannt, dass bei dem Einsatz von (kurzen) Glasfasern in dem Kunststoff möglichst keine Nachbearbeitung des Gehäuses oder Gehäuseteiles erfolgen sollte.

Grundsätzlich sind beliebige Formgebungen des Gehäuses möglich, beispielsweise auch ein Gehäuse, bei welchem zwei in erster Näherung "hutartige" Gehäuseteile über Flansche, welche im Bereich der Hutkrempen gebildet sind und eine Teilungsebene des Gehäuses vorgeben, die quer zu einer Längsachse des Gehäuse orientiert ist, miteinander verbunden sind. In weiterer Ausgestaltung des Ventils schlägt die Erfindung allerdings vor, dass das Gehäuse mit einem Hauptgehäuse, welches bspw. in erster Näherung "topfartig" ausgebildet ist, und einem das Hauptgehäuse schließenden Deckel gebildet ist. Mit dem Hauptgehäuse wird automatisch bereits ein Innenraum des Gehäuses vorgegeben, in welchem die relevanten Ventilelemente, beispielsweise ein Ventilschieber, angeordnet werden können. Eine Montage ist für eine derartige Ausgestaltung des Gehäuses auch vereinfacht, indem in dem genannten Innenraum des Hauptgehäuses sukzessive die relevanten Bauelemente angeordnet werden. Sind sämtliche relevanten Bauelemente in dem Innenraum angeordnet, kann dieser über den Deckel abgeschlossen werden. Es versteht sich, dass in dem Hauptgehäuse neben der Öffnung, die von dem Deckel verschlossen wird, weitere Öffnungen bspw. zur Bildung von Anschlüssen angeordnet sein können, beispielsweise in einer Seitenwand und/oder der der Öffnung für den Deckel gegenüberliegenden Bodenwand.

Durchaus möglich ist, dass für das mit Kunststoff gebildete Gehäuse eine Entlüftung des Ventils entsprechend DE 10 2004 050 194 B3 in einem Bodenbereich des Ventils und fluchtend zur Längsachse des Ventils angeordnet ist. Allerdings kann eine derartige Ausgestaltung bedingen, dass das Ventil eine durch ein Hauptgehäuse in Richtung der Längsachse durchgehende Bohrung besitzt mit variierendem Querschnitt, wobei insbesondere ein Querschnitt im Bereich der Entlüftung des Ventils eine Hinterschneidung bilden kann. Eine derartige Hinterschneidung kann erfindungsgemäß vermieden werden, wenn ein Bodenbereich des Gehäuses mit einer geschlossenen Bodenwandung ausgebildet ist, so dass hier nicht die Entlüftung angeordnet ist. Vielmehr ist die Entlüftung des Ventils in einem Seitenbereich des Hauptgehäuses vorgesehen. Somit kann eine Zentralbohrung des Hauptgehäuses, die insbesondere zur Aufnahme eines Ventilschiebers dient, nicht als Durchgangsbohrung mit den genannten Hinterschneidungen ausgebildet, sondern vielmehr als Sacklochbohrung (ggf. mit zusätzlichen Querbohrungen, die sich durch die Seitenwandungen des Hauptgehäuses erstrecken). Hierdurch kann unter Umständen erst die Fertigung des Gehäuses des Ventils mit Kunststoff ermöglicht werden oder die Fertigung vereinfacht werden, beispielsweise indem die Zahl der einzusetzenden Schieber oder Kerne für das Spritzgießverfahren reduziert wird.

In weiterer Ausgestaltung der Erfindung schlägt diese vor, dass die Entlüftung mit einem Einsatz aus Kunststoff gebildet ist. Dieser Einsatz ist fluidisch mit einer seitlichen Ausnehmung, insbesondere einem Kanal oder einem Anschluss, des Hauptgehäuses verbindbar. Ebenfalls möglich ist, dass der Einsatz zumindest teilweise in eine seitliche Ausnehmung des Hauptgehäuses einsetzbar ist.

Vorzugsweise schlägt die Erfindung vor, einen Öffnungswinkel der kegelstumpfförmigen Innenfläche von 0,1° bis 2,0°, beispielsweise 0,2° bis 1,0° einzusetzen. Untersuchungen der Anmelderin haben gezeigt, dass ein derartiger Öffnungswinkel der kegelstumpfförmigen Innenfläche einerseits ein gutes Entformen des Kerns gewährleistet, aber andererseits noch mit der Elastizität des Dichtelements ausgleichbar ist.

Andererseits kann der geschlossene Bodenbereich des Hauptgehäuses infolge der Anordnung der Entlüftung im Seitenbereich des Hauptgehäuses dazu genutzt werden, dass eine Druckfeder, über welche ein Steuerschieber des Ventils abgestützt ist, nicht zwingend - wie in DE 10 2004 050 194 B3 offenbart - auf der Rückseite des Steuerkolbens angeordnet werden muss, sondern vielmehr zwischen die Bodenwandung des Hauptgehäuses und eine Stirnseite des Steuerschiebers zwischengeschaltet sein kann, wodurch sich erweiterte konstruktive Gestaltungsmöglichkeiten ergeben.

Während grundsätzlich die Fertigung des Hauptgehäuses mit beliebigen Kernen, Kernschiebern in einteiliger oder mehrteiliger Ausbildung möglich ist, schlägt die Erfindung in weiterer Ausgestaltung vor, dass ein Innenraum des Hauptgehäuses mit einem Kernschieber hergestellt ist, der mindestens einen quer zur Längsachse orientierten Fortsatz besitzt. Um ein Entfernen des Kernschiebers mit Fortsatz dennoch zu ermöglichen, insbesondere durch alleinige Bewegung des Kernschiebers mit Fortsatz entlang der Längsachse, erfolgt eine Dimensionierung der Wandstärken des Hauptgehäuses, eine Wahl der Steifigkeiten des eingesetzten Materials, die Dimensionierung des mindestens einen Fortsatzes derart, dass der Kernschieber über eine Zwangsentformung aus dem erkalteten Kunststoff entfernt werden kann. Somit wird eine elastische Aufweitung des Hauptgehäuses genutzt, um mit den Fortsätzen gebildete "Hinterschnitte" fertigen und dennoch eine Entfernung eines einteiligen Kernschiebers ermöglichen zu können.

Während der Deckel im einfachsten Fall lediglich dem Verschließen des Hauptgehäuses dient, kann dieser gemäß einem weiteren Vorschlag der Erfindung auch multifunktional eingesetzt sein, indem dieser auch den Steuerraum begrenzt, über welchen eine Betätigung des Ventils über eine geeignete Steuerungseinrichtung erfolgt.

Möglich ist auch, dass der Deckel als weitere Funktion eine Aufnahme für ein Magnetventil bildet, über welches beispielsweise die Druckverhältnisse in dem vorgenannten Steuerraum beeinflusst werden können.

In weiterer Ausgestaltung dieses Grundgedankens nimmt der Deckel nicht lediglich das Magnetventil selber auf. Vielmehr bildet in diesem Fall der Deckel auch einen Ventilsitz aus, an welchem in einer Schließstellung des Magnetventils ein von dem Magnetventil entsprechend einer elektrischen Beaufschlagung bewegter Ventilkörper zur Anlage kommt.

Ein besonderer Aspekt der Erfindung widmet sich der Verbindung des Deckels mit dem Hauptgehäuse. Während durchaus möglich ist, dass ein Verschrauben des Deckels mit dem Hauptgehäuse erfolgen kann mit Ausbildung einer Bohrung oder eines Gewindes für die hierzu eingesetzte mindestens eine Schraube durch den Kunststoff selbst oder in den Kunststoff eingegossene anderweitige Materialen, Hülsen oder ähnliches, schlägt die Erfindung entsprechend einer weiteren Ausgestaltung vor, dass der Deckel ohne Einsatz einer Schraubverbindung mit dem Hauptgehäuse verbunden ist.

Für eine derartige Ausführungsform ist der Deckel auf das Hauptgehäuse aufgeklipst. Eine derartige Aufklipslösung trägt dem für Deckel und/oder Hauptgehäuse eingesetzten Kunststoff Rechnung, wobei ein Federelement, welches für das Aufklipsen und die erzeugte Rast- oder Verriegelungsverbindung beaufschlagt wird, unmittelbar von einem federnden Steg oder einem elastischem Materialbereich des Deckels aus Kunststoff gebildet sein kann. Andererseits ist ein aufgeklipster Deckel besonders einfach zu montieren. Auch die Demontage kann einfach möglich sein, wenn bspw. eine Demontageschräge vorgesehen ist, die mit Aufbringung von Kräften die Rastverbindung wieder löst. Vorzugsweise ist aber eine derartige einfache Demontage nicht gewünscht. In diesem Fall kann u. U. eine durch die Rastverbindung gebildete formschlüssige Verbindung nur mit einem Zusatzwerkzeug gelöst werden. Möglich ist darüber hinaus, dass eine zusätzliche Sicherungsvorrichtung vorgesehen ist, die nach einer Verbindung des Deckels mit dem Hauptgehäuse, ggf. mit einer vorherigen Prüfung dieser Verbindung auf ordnungsgemäße Verbindungsherstellung und/oder Dichtigkeit, zur Wirkung kommt. Beispielsweise kann das Sicherungselement den elastischen Freiheitsgrad des Rastelements in der Sicherungsstellung blockieren.

Für eine alternative Ausführungsform ist der Deckel über eine Bajonett-Verbindung mit dem Hauptgehäuse verbunden, die ebenfalls auf sehr einfache Weise zu montieren und demontieren ist.

Im Rahmen der Erfindung kann eine Abdichtung zwischen dem Deckel und dem Hauptgehäuse über ein Dichtelement erfolgen, welches zwischen dem Deckel und dem Hauptgehäuse elastisch verspannt ist. Beispielsweise handelt es sich bei einem derartigen Dichtelement um einen O-Ring. Eine multifunktionale Nutzung dieses Dichtelements wird ermöglicht, wenn dieses Dichtelement zusätzlich zu der Abdichtung zwischen Deckel und Hauptgehäuse dafür zuständig ist, die axiale Sicherung der Hülsen und/oder die axiale Vorspannung der Dichtelemente zu erzeugen. Liegen die Hülsen oder ein Abstützkörper für diese Hülsen zusätzlich zu dem Hauptgehäuse, beispielsweise radial innenliegend von diesem, an dem Dichtelement an, kann mit der Herstellung der Verbindung zwischen Deckel und Hauptgehäuse über das Dichtelement eine elastische Federkraft auf die Hülsen aufgebracht werden, die diese dann in dem Innenraum, ggf. unter begrenzter Verschieblichkeit infolge der Elastizität der zwischengeschalteten Dichtelemente, halten. Mit einem axialen Verpressen der zwischen die Hülsen zwischengeschalteten Dichtelemente können die Dichtelemente auch nach außen gepresst werden, so dass die Dichtelemente trotz der kegelstumpfförmigen Innenfläche an diese angepresst werden.

Üblicherweise erfolgt die Fertigung von Ventilen mit einer unterschiedlichen Anzahl von Anschlüssen, beispielsweise infolge der über das Ventil zu speisenden Kreise, Federbälge, Tragbälge oder Liftbälge und/oder Achse. Erfindungsgemäß kann die Fertigung des Ventils mit einer unterschiedlichen Zahl der Anschlüsse aber auch dadurch erfolgen, dass die Zahl der Anschlüsse über Zusatzkerne vorgegeben werden kann. Findet somit beispielsweise ein Spritzgießverfahren mit Kunststoff Einsatz in derselben Grundform mit einer unterschiedlichen Anzahl von Zusatz- oder Wechselkernen, kann unter Beibehaltung sämtlicher Fertigungsschritte und Nutzung derselben Grundform die Zahl der Anschlüsse des erstellten Ventils variiert werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine Luftfederungsanlage gemäß dem Stand der Technik mit abgesenkter Liftachse.
- **Fig. 2**: zeigt schematisch die Luftfederungsanlage gemäß Fig. 1 für angehobene Liftachse.
- **Fig. 3**: zeigt schematisch ein elektrisch ansteuerbares Ventil, hier ein Liftachsventil.
- **Fig. 4**: zeigt ein Ventil in Ausbildung als Liftachsventil in einem Schnitt B-B (vgl. Fig. 9) in einer Schaltstellung, die zu einer abgesenkten Liftachse führt.
- **Fig. 5**: zeigt das Liftachsventil in einem Schnitt mit einer versetzten Schnittführung A-1 - A-1 bzw. A-2 - A-2 (vgl. Fig. 9).
- **Fig. 6**: zeigt das Liftachsventil in einem Schnitt entsprechend Fig.4, aber in einer Schaltstellung, welche einer angehobenen Liftachse entspricht.
- **Fig.7**: zeigt das Liftachsventil in einem Schnitt entsprechend Fig.5, aber in einer Schaltstellung, die einer angehobenen Liftachse entspricht.
- **Fig. 8**: zeigt eine räumliche Ansicht des Liftachsventils gemäß Fig. 4 bis 7.
- **Fig. 9**: zeigt eine Draufsicht auf das Liftachsventil gemäß Fig. 4 bis 8, aus welcher die unterschiedlichen Schnittführungen ersichtlich sind.
- **Fig. 10**: zeigt eine räumliche Ansicht von oben auf ein Detail des Liftachsventils mit einem über eine Rastverbindung an einem Hauptgehäuse gehaltenen Deckel.
- **Fig. 11**: zeigt den Deckel mit Hauptgehäuse gemäß Fig. 10 in einer räumlichen Ansicht schräg von unten.
- **Fig. 12**: zeigt eine räumliche Ansicht eines Details eines als Liftachsventils ausgebildeten Ventils mit einem Deckel, welcher über einen Bajonett-Verschluss mit einem Hauptgehäuse verbunden ist.
- **Fig. 13**: zeigt den Deckel mit Hauptgehäuse gemäß Fig. 12 in einer räumlichen Ansicht schräg von unten.
- **Fig. 14**: zeigt ein weiteres als Liftachsventil ausgebildetes Ventil mit einem Deckel, welcher über einen Bajonett-Verschluss mit zusätzlichen Haken mit einem Haupt- gehäuse verbunden ist, in einer räumlichen Detailansicht schräg von unten.
- **Fig. 15**: zeigt den Deckel mit Hauptgehäuse gemäß Fig. 14 in einer räumlichen Detail- ansicht schräg von unten.
- **Fig. 16**: zeigt eine weitere Ausführungsform eines als Liftachsventils ausgebildeten Ventils mit einem Deckel, der über radiale und tangentiale Rasthaken mit einem Hauptgehäuse verbunden ist, in einer räumlichen Detailansicht schräg von oben.
- **Fig. 17**: zeigt den Deckel mit Hauptgehäuse gemäß Fig. 16 in einer räumlichen Detail- ansicht schräg von unten.
- **Fig. 18**: zeigt die Verbindung zwischen einem Deckel und einem Hauptgehäuse über eine Rastverbindung in einem Längsschnitt mit einem Sicherungselement, welches sich in einer nicht gesicherten Stellung befindet.
- **Fig. 19**: zeigt den Deckel mit Hauptgehäuse gemäß Fig. 18, wobei sich das Sicherungs- element in der gesicherten Stellung befindet.
- **Fig. 20**: zeigt eine weitere Verbindung eines Deckels mit einem Hauptgehäuse über eine Rastverbindung in einem Längsschnitt, wobei sich das Sicherungselement in einer nicht gesicherten Stellung befindet.
- **Fig. 21**: zeigt den Deckel mit Hauptgehäuse und Sicherungselement gemäß Fig. 20, wobei sich das Sicherungselement in der gesicherten Stellung befindet.

### FIGURENBESCHREIBUNG

Im Folgenden wird die Erfindung anhand eines als Liftachsventil ausgebildeten Ventils erläutert. Diese beispielhafte Auswahl eines Liftachsventils soll die vorliegende Erfindung nicht auf diesen Ventiltyp einschränken. Vielmehr sind die erfindungsgemäßen Merkmale für eine beliebiges anderweitiges Ventil einsetzbar, sofern dieses Einsatz findet in einer Druckluftanlage eines Nutzfahrzeugs und in Schieberbauart ausgebildet ist.

**Fig. 1** zeigt eine Luftfederungsanlage 1, wie diese beispielsweise aus DE 10 2004 050 194 B3 bekannt ist. Zentrales Teil der Luftfederungsanlage 1 ist ein Liftachsventil 2, welches ein aufgesetztes Magnetventil 3 besitzt und somit elektrisch angesteuert wird. Die Ansteuerung des Magnetventils 3 erfolgt über eine elektrische oder elektronische Steuereinheit 4 und eine elektrische Steuerleitung 5, über die letztendlich ein Magnet 6 des Magnetventils 3 erregt bzw. nicht erregt wird. Der Magnet 6 ist auf einer Feder 7 abgestützt und nimmt in nicht erregtem Zustand infolge der Vorspannung der Feder die in Fig. 1 dargestellte Schließstellung ein. Das Magnetventil 3 weist einen eigenen Entlüftungsanschluss 8 auf.

Das Liftachsventil 2 besitzt in seinem pneumatischen Teil ein Hauptgehäuse 9, in welchem ein Steuerkolben 10 mit einer Kolbenstange 11 gleitend und dichtend verschiebbar ist. Die Kolbenstange 11 ist in Schieberbauart ausgebildet und besitzt auf ihrem Umfang eine Mehrzahl von Dichtungen, die dazu dienen, entsprechende Leitungsverbindungen herzustellen oder abzusperren. Der Steuerkolben 10 ist auf einer Feder 12 abgestützt. Die Feder 12 befindet sich in einem Federraum 13, der mit Hilfe eines die Kolbenstange 11 durchsetzenden Kanals 14 an einen Entlüftungsanschluss 15 angeschlossen ist. Der Steuerkolben 10 begrenzt einen Steuerraum 16.

Das Hauptgehäuse 9 des pneumatischen Teils des Liftachsventils 2 besitzt eine Reihe von Anschlüssen. An einem Anschluss 17 ist ein Vorratsbehälter 18 über eine Versorgungsleitung 19 angeschlossen. Damit steht Vorratsluft zwischen den beiden obersten Dichtungen an der Kolbenstange 11 des Liftachsventils 2 an. Ebenfalls steht Vorratsluft über eine Zweigleitung 20 an einem Einlasssitz 21 des Magnetventils 3 an. Der Magnet 6 bildet mit dem Einlasssitz 21 ein Einlassventil 6, 21. Das Magnetventil 3 weist einen Auslasssitz 22 auf. Der Magnet 6 bildet mit dem Auslasssitz 22 ein Auslassventil 6, 22. Von einem um den Magneten 6 gebildeten Ventilraum 23 führt eine Leitung 24 zu dem Steuerraum 16 des Steuerkolbens 10. Das Auslassventil 6, 22 führt über den Entlüftungsanschluss 8 in die Atmosphäre. In der gezeigten Stellung ist also der Steuerraum 16 entlüftet und der Steuerkolben 10 befindet sich infolge der Kraft der Feder 12 in seiner einen Stellung, die als Entlüftungsstellung bezeichnet wird und bei der die Liftachse abgesenkt ist. Zu diesem Zweck ist am Hauptgehäuse 6 des Liftachsventils 2 ein Anschluss 25 vorhanden, von dem eine Leitung 26 zu einem Liftbalg 27 einer Liftachse 28 führt. Die Leitung 26 und damit der Liftbalg 27 ist in dieser Stellung über einen Stichkanal 29, der mit dem Kanal 14 in Verbindung steht, entlüftet. Die Entlüftung des Liftbalgs 27 entspricht dem abgesenkten Zustand der Liftachse 28. Die Liftachse 28 weist ansonsten Federbälge 30 auf, die über einen Anschluss 31 und eine Leitung 32 be- bzw. entlüftet werden. Schließlich besitzt das Hauptgehäuse 9 des Liftachsventils 2 noch einen weiteren Anschluss 33, an dem eine Leitung 34 angeschlossen ist, in der ein Niveauregelventil 35 angeordnet ist. Es versteht sich, dass das Niveauregelventil 35 über eine Druckluftversorgung verfügt und andererseits entsprechend dem Beladungszustand einen modifizierten Druck aussteuert, der über eine an die Leitung 34 angeschlossene Leitung 36 in die Tragbälge 37 einer Tragachse 38 gelangt. In der Leitung 34 nach dem Niveauregelventil 35 ist in der Regel ein Drucksensor (nicht dargestellt) angeordnet, der ein dem Druck entsprechendes elektrisches Signal über eine Signalleitung 39 der Steuereinheit 4 zuführt, wobei dieser abhängig von dem Signal das Magnetventil 3 schaltet.

Funktion und Wirkungsweise der bekannten Luftfederungsanlage 1 gemäß Fig. 1 sind damit für einen Fachmann verständlich. Es ist die Entlüftungsstellung des Liftachsventils 2 dargestellt, also eine Stellung, die sich dann ergibt, wenn der Magnet 6 des Magnetventils 3 nicht erregt ist. Da der Liftbalg 27 entlüftet ist, ist die Liftachse 28 abgesenkt. Bei leerem oder unterhalb des Umschaltpunktes teilbeladenem Fahrzeug steuert die Steuereinheit 4 über die Steuerleitung 5 ein entsprechendes Signal an das Magnetventil 3, so dass der Magnet 6 erregt wird und in seine andere Stellung umschaltet. Dabei wird das Auslassventil 6, 22 geschlossen und das Einlassventil 6, 21 geöffnet, so dass Druckluft in den Steuerraum 16 gelangt. In der Folge werden der Steuerkolben 16 und die Kolbenstange 11 ihre andere Stellung einnehmen, wie dies prinzipiell in **Fig. 2** angedeutet ist. Damit wird der Liftbalg 27 belüftet und die Liftachse 28 angehoben, wobei die Federbälge 30 entlüftet sind.

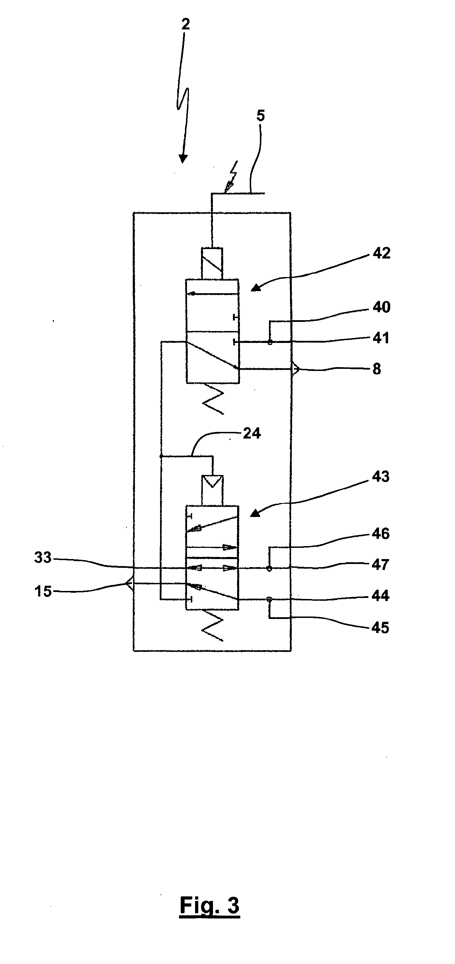

Während grundsätzlich die Übertragung der im Folgenden erläuterten Merkmale auch auf eine Ausgestaltung des Liftachsventils 2 gemäß den Fig. 1 und 2 möglich ist, ist die Übertragung der Merkmale auf eine beliebige andere Ausgestaltung eines Liftachsventils 2 möglich. Beispielsweise zeigt Fig. 3 eine Prinzipskizze eines Liftachsventils 2 bei welchem ein Anschluss 17 für eine Zuführung eines Vorratsdrucks verzweigt ausgebildet ist, so dass zwei Anschlüsse 40, 41 vorgesehen sind. Das Magnetventil 3 ist in diesem Fall ebenfalls als 3/2-Wegeventil 42 ausgebildet. Das Schieberventil gemäß Fig. 1 und 2 ist hier als 5/2-Wegeventil 43 ausgebildet, wobei die Steuerleitung 24 des pneumatisch gesteuertem 5/2-Wegeventils 43 über das 3/2-Wegeventil 42 je nach dem Signal in der Steuerleitung 5 mit einem Anschluss 41, 40, also dem Vorratsdruck, verbindbar ist oder mit dem Entlüftungsanschluss 8. Für entlüftete Steuerleitung 24 befindet sich das 5/2-Wegeventil 43 in der in **Fig. 3** wirksamen Schaltstellung. In dieser verbindet das 5/2-Wegeventil 43 einen Entlüftungsanschluss 15 mit Anschlüssen 44, 45, welche jeweils mit einem Liftbalg 27 verbunden sind, während Anschlüsse 46, 47, die mit Luftfederbälgen 30 verbunden sind, über das 5/2-Wegeventil 43 mit einem Anschluss 33 verbunden sind, der in fluidischer Verbindung mit dem Niveauregelventil 35 steht. Hingegen sind in der anderen Schaltstellung mit einer Druckbeaufschlagung der Steuerleitung 24 die Anschlüsse 46, 47 mit dem Entlüftungsanschluss 15 verbunden, während die Anschlüsse 44, 45 über das 3/2-Wegeventil mit den Anschlüssen 40, 41 verbunden sind, so dass hier der Vorratsdruck wirkt.

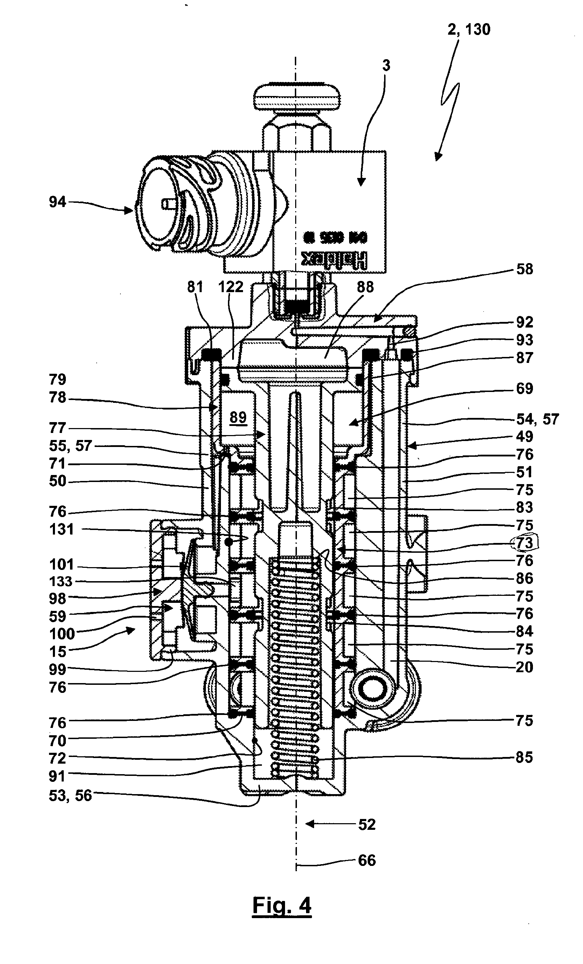

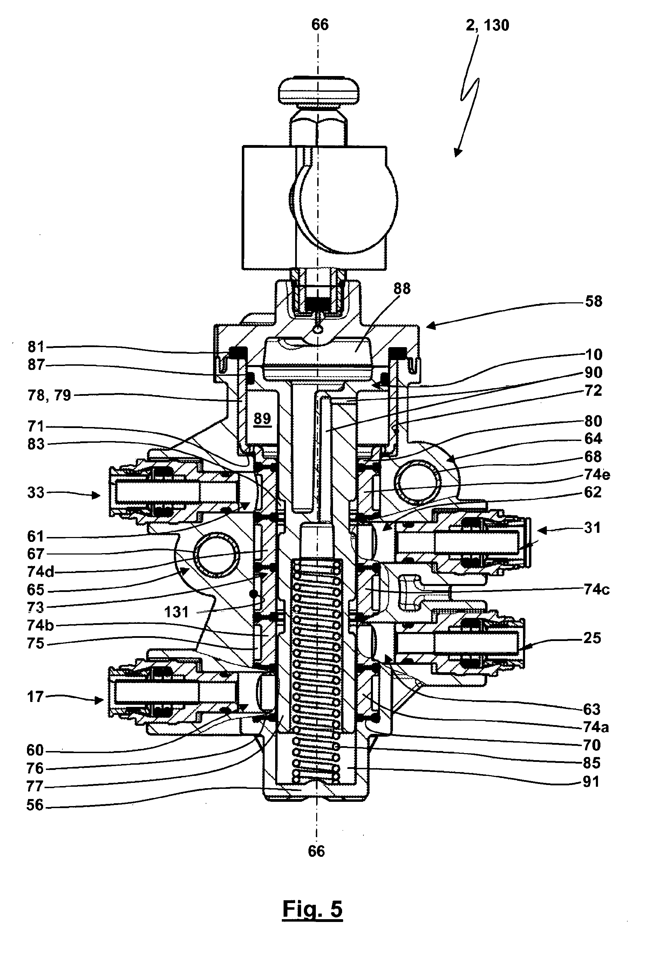

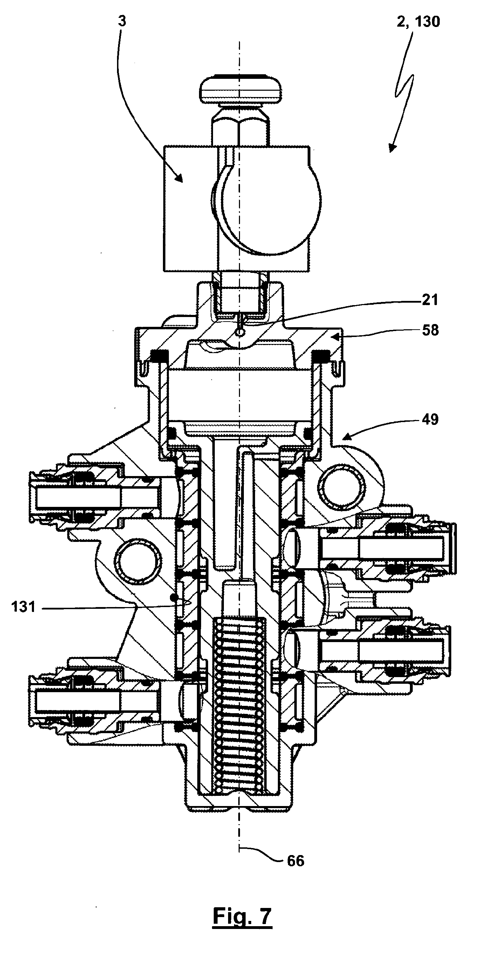

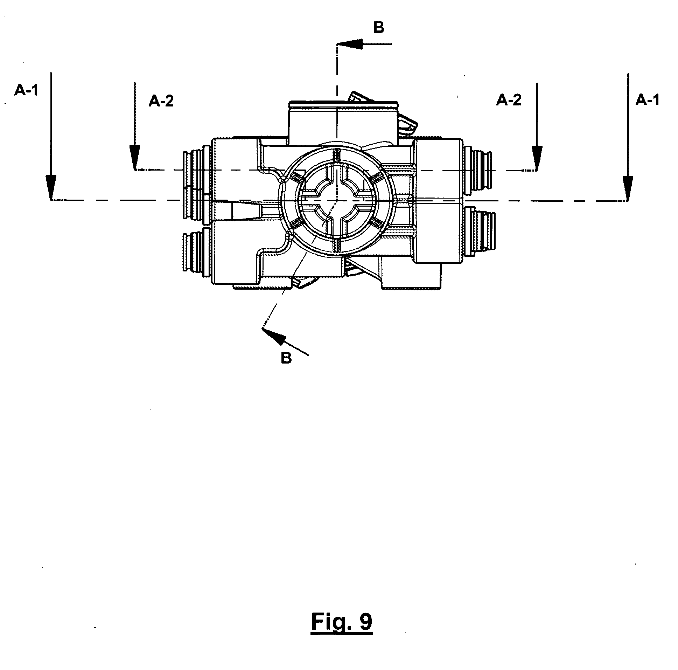

**Fig.4 bis 9** zeigen eine Ausführungsform eines Liftachsventils 2, wobei hierfür teilweise dieselben Bezugszeichen verwendet werden wie für die Ausführungsformen gemäß Fig. 1 bis 3, sofern die mit den Bezugszeichen gekennzeichneten Bauelemente oder konstruktiven Details in gewissem Ausmaß konstruktiv oder funktional entsprechen. In den Fig. 5 und 7 ist eine versetzte Schnittführung mit Teilschnitten A-1 - A-1 und A-2 - A2 derart gewählt, dass die Teilschnitte jeweils durch die Längsachse der einzelnen Anschlüsse verlaufen (vgl. Fig. 9).

Das Liftachsventil 2 besitzt ein Gehäuse 48, welches mit einem Deckel 58 sowie einem Hauptgehäuse 49 gebildet ist. Das Hauptgehäuse 49 ist mit einem ersten Gehäuseteil 50 sowie einem zweiten Gehäuseteil 51 gebildet, wobei die beiden Gehäuseteile 50, 51 im Bereich einer Teilungsebene 52 unter Abdichtung mit bündigen Innenflächen aneinander anliegen. Die Gehäuseteile 50, 51 sind jeweils derart ausgebildet, dass diese aus einer Form in eine Richtung ausgehoben werden können, die vertikal zur Teilungsebene 52 orientiert ist. Hierbei besitzen die Gehäuseteile 50, 51 eine in erster, grober Näherung eine konvexe Außenkontur ihres Querschnitts.

Das Hauptgehäuse 49 ist in dem in Fig. 4 dargestellten Schnitt in erster Näherung U-förmig ausgebildet mit einem Grundschenkel 53 sowie zwei Seitenschenkeln 54, 55. Der Grundschenkel 53 bildet eine im Bereich der Teilungsebene 52 geteilte Bodenwand 56, während die Seitenschenkel 54, 55, eine ebenfalls durch die Teilungsebene 52 geteilte, um eine Längsachse 66 umlaufende Seitenwand 57 bilden. In den Endbereichen der Seitenschenkel 54, 55 und der Seitenwand 57 bildet das Hauptgehäuse 49 eine Öffnung, welche mit dem Deckel 58 verschlossen ist. Quer zu einer Längsachse des Liftachsventils 2 sind in die Seitenwand 37 des Hauptgehäuses 49 folgende Ausnehmungen eingebracht:
- eine Ausnehmung 59, im Bereich welcher der Entlüftungsanschluss 15 gebildet ist (vgl. Fig. 4),
- eine Ausnehmung 60 für einen Vorratsanschluss 17 zur Verbindung mit einem Vorratsbehälter 18 (Fig. 5),
- eine Ausnehmung 61 für einen Anschluss 33, welcher fluidisch mit dem Niveauregelventil 35 verbunden ist (Fig. 5),
- eine Ausnehmung 62 für einen Anschluss 31 zu dem Federbalg 30 (Fig. 5) und
- eine Ausnehmung 63 für einen Anschluss 25, der fluidisch mit dem Liftbalg 27 verbunden ist (Fig. 5).

Für das dargestellte Ausführungsbeispiel sind die Anschlüsse 17, 25, 31, 33 jeweils mit Einsätzen gebildet, welche in die Ausnehmungen 60, 61, 62, 63 eingesetzt, eingepresst oder eingeschraubt sind und über einen gesicherten Schnellkopplungsmechanismus zur Verbindung mit den zugeordneten Leitungen verfügen.

Das Hauptgehäuse 49 besitzt Erweiterungen oder Materialanhäufungen 64, 65 die auf gegenüberliegenden Seiten der Längsachse 66 des Liftachsventils 2 angeordnet sind und welche ebenfalls durch die Teilungsebene 52 geteilt sind. In die Erweiterungen sind metallische Hülsen 67, 68 eingegossen oder in hierfür geschaffene Ausnehmungen gefügt, die parallele Längsachsen besitzen. Die Hülsen 67, 68 dienen der Befestigung des Liftachsventils 2 an einem benachbarten Bauteil des Kraftfahrzeugs, indem eine Schraube durch die Hülsen 67, 68 gesteckt werden kann, die dann mit dem benachbarten Bauteil verschraubt werden kann. In dem Hauptgehäuse 49 ist ein Innenraum 69 gebildet, mit welchem sämtliche Anschlüsse 17, 25, 31, 33 sowie der Entlüftungsanschluss 15 kommunizieren. Der Innenraum 69 ist mit einer sich von der Bodenwandung 56 weg über zwei Stufen 70, 71 weg erweiternden Sacklochbohrung 72 des Hauptgehäuses 49 begrenzt, deren Längsachse koaxial zur Längsachse 66 orientiert ist. Auch außerhalb der Stufen 70, 71 ist die Sacklochbohrung 72 nicht hohlzylinderförmig, sondern vielmehr kegelstumpfförmig mit einer kegelstumpfförmigen Innenfläche 131 ausgebildet, wobei sich der Kegelstumpf von der Bodenwand 56 weg öffnet, beispielsweise mit einem Öffnungswinkel von 0,1° bis 2,0°, bspw. 0,2° bis 1,0°. In Fig. 5 oberhalb der Stufe 70 erstreckt sich in der Sacklochbohrung 72 bis zu dem oberen Endbereich der Seitenwand 57 ein mit mehreren Elementen gebildeter Ventilkörper 73. Der Ventilkörper 73 ist für das dargestellte Ausführungsbeispiel mit mehreren Hülsen 74a bis 74e gebildet. Die Hülsen 74 besitzen in grober Näherung jeweils eine hohlzylinderförmige Geometrie, wobei in die äußere Mantelfläche der Hülsen 74 jeweils mittig eine umlaufende Nut 75 eingebracht ist. Die Mantelfläche der Hülsen 74 ist derart dimensioniert, dass diese unter Ausbildung eines geringfügigen Spiels, welches infolge des genannten Öffnungswinkels über die Längsachse 66 der Sacklochbohrung 72 geringfügig variiert, in die Sacklochbohrung 72 einsetzbar. An den in erster Näherung kreisringförmigen Stirnseiten der Hülsen 74 liegen diese jeweils an einem elastischem Dichtelement 76 an, welches sowohl radial nach außen gegenüber der Sacklochbohrung 72 eine Abdichtung bewirkt als auch radial nach innen gegenüber einem Steuerschieber 77 des Liftachsventils 2. Die am nähesten an der Bodenwand 56 angeordnete Hülse 74 a ist über ein derartiges Dichtelement 76 an der Stufe 70 abgestützt, während zwischen den einander zugewandten Stirnseiten der Hülsen 74a, 74b, 74c, 74d, 74e jeweils ein entsprechendes Dichtelement 76 zwischengeschaltet ist. Auf der der Bodenwand 56 abgewandten Stirnseite der Hülse 74e ist über ein entsprechendes Dichtelement 76 eine Abstützhülse 78 abgestützt. Die Abstützhülse 78 ist beispielsweise mit einem tiefgezogenen Blech oder einem Kunststoffkörper gebildet. Die Abstützhülse 78 besitzt einen hohlzylindrischen, unter Umständen ebenfalls leicht konischen Grundkörper 79, dessen äußere Mantelfläche passgenaue Aufnahme in die Sacklochbohrung 72 oberhalb der Stufe 71 findet. Im Bereich der Stufe 71 des Hauptgehäuses 49 ist der Durchmesser der Abstützhülse 78 über eine Abstufung verringert. Die Abstützhülse 78 endet in dem der Hülse 74e zugewandten Endbereich mit einem quer zur Längsachse 66 orientierten Bund 80, der mit einer kreisringförmigen Stirnfläche anliegt an dem Dichtelement 76, welches an der Hülse 74e abgestützt ist. Im Endbereich der Seitenwand 57 ist über einen im Folgenden noch detailliert erläuterten Verbindungsmechanismus der Deckel 58 mit dem Hauptgehäuse 49 verbunden. Zwischen Deckel 58 und Hauptgehäuse 49 wirkt ein in einer Umfangsnut geführtes Dichtelement 81, beispielsweise ein O-Ring. Das Dichtelement 81 stützt sich allerdings nur über eine Teil-Kreisringfläche an einer geeigneten Gegenfläche des Hauptgehäuses 49 ab, um eine Abdichtung zu bewirken. Eine andere, radial innenliegend von der vorgenannten Teil-Kreisringfläche angeordnete Teilringfläche des Dichtelements 81 ist - wie aus Fig. 5 ersichtlich - an der zugewandten Stirnseite der Abstützhülse 78 abgestützt. Damit erzeugt das Dichtelement 81 eine Federkraft, welche die Abstützhülse 78 und den Ventilkörper 73 in die Sacklochbohrung 72 drückt. Hierbei verläuft der Kraftfluss von dem Dichtelement 81 über die Abstützhülse 78, ein Dichtelement 76, Hülse 74e, Dichtelement 76, Hülse 74d, Dichtelement 76, Hülse 74c, Dichtelement 76, Hülse 74b, Dichtelement 76, Hülse 74a, Dichtelement 76 bis zu der Stufe 70. Eine Beeinflussung der Kraftverhältnisse kann ergänzend erfolgen, indem eine Stufe 82 der Abstützhülse 78 zur Anlage an die Stufe 71 kommt, so dass durch den Abstand der Stufe 82 von dem Bund 80 vorgegeben ist, an welchem axialen Ort entlang der Längsachse 66 das letzte Dichtelement 76 und damit die Hülse 74e angeordnet ist.

Die Nuten 75 der Hülsen 74 stehen jeweils in Wirkverbindung mit einem Anschluss, nämlich die Nut 75
- der Hülse 74a mit Ausnehmung 60 und dem Anschluss 17,
- der Hülse 74b mit der Ausnehmung 63 und dem Anschluss 25,
- der Hülse 74c mit der Ausnehmung 59 und dem Entlüftungsanschluss 15,
- der Hülse 74d mit der Ausnehmung 62 und dem Anschluss 31 und
- der Hülse 74e mit der Ausnehmung 61 und dem Anschluss 33.

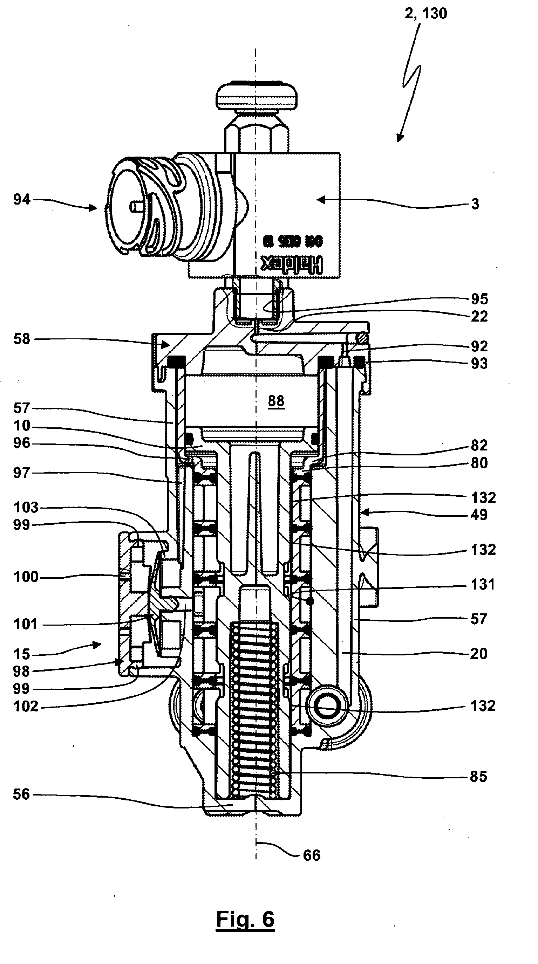

Die Dichtelemente 76 besitzen eine hinreichende radiale Elastizität, um die Konizität der Sacklochbohrung auszugleichen. In dem Ventilkörper 73 ist unter Abdichtung durch die Dichtelemente 76 der Steuerschieber 77 geführt. Der Steuerschieber 77 besitzt im Bereich der Wirkverbindung mit den Dichtelementen 76 eine zylindrische Mantelfläche, in welche in Umfangsrichtung umlaufende Steuernuten 83, 84 eingebracht sind. Zwischen den Hülsen 74, der Mantelfläche des Steuerschiebers 77 und den zugeordneten, sich an der Stirnseite der jeweiligen Hülse 74 abstützenden Dichtelementen 76 sind jeweils Steuerräume 132 gebildet. Über die Steuernuten 83, 84 können selektiv je nach Stellung des Steuerschiebers 77 einzelne Dichtelemente 76 überbrückt werden, so dass benachbarte Steuerräume 132 über die Steuernuten 83, 84 miteinander verbunden sind. Die Steuerräume 132 sind jeweils über eine Durchgangsausnehmung 133 mit dem der Hülse 74 zugeordneten Anschluss verbunden. Die Nuten 75 der Hülsen 74 sind jeweils über eine radiale Bohrung mit dem umlaufenden, über die Dichtelemente 76 abgedichteten Steuerraum 132 zwischen der inneren Mantelfläche der Hülsen 74 und der äußeren Mantelfläche des Steuerschiebers 77 verbunden. In der in den Fig. 4 und 5 dargestellten oberen Schaltstellung des Steuerschiebers 77 wird über die Steuernut 83 eine Verbindung zwischen den Anschlüssen 31, 33 geschaffen, während die Steuernut 84 eine Verbindung des Anschlusses 25 mit dem Entlüftungsanschluss 15 bereitstellt. Hingegen schafft in der unteren Schaltstellung des Steuerschiebers 77 gemäß Fig. 6 und 7 die Steuernut 83 eine Verbindung des Anschlusses 31 mit dem Entlüftungsanschluss 15, während die Steuernut 84 eine Verbindung zwischen den Anschlüssen 17, 25 schafft.

Der Steuerschieber 77 ist über eine vorgespannte Druckfeder 85 in Richtung der Stellung gemäß Fig. 5 und 6 beaufschlagt. Die Druckfeder 85 ist hierbei zwischen der Bodenwand 56 und einer Stirnseite 86 eingespannt. Um trotz großer Länge der Druckfeder 85 eine kompakte Bauweise zu ermöglichen, ist die Stirnseite 86 für das dargestellte Ausführungsbeispiel mit einer Sacklochbohrung oder abgestuften Bohrung in das Innere des Steuerschiebers 77 verlagert. In dem der Bodenwand 56 abgewandten Endbereich bildet der Steuerschieber 77 den Steuerkolben 10 aus, dessen Durchmesser vorzugsweise gegenüber dem Durchmesser des Steuerschiebers 77 im Bereich der Hülsen 74 erweitert ist. Der Steuerschieber 10 ist unter Abdichtung durch ein Dichtelement 87 verschieblich in den Grundkörper 79 der Abstützhülse 78 geführt und begrenzt einen Steuerraum 88, welcher darüber hinaus von der Abstützhülse 78 und dem Deckel 58 begrenzt ist. Die auf der dem Steuerraum 88 abgewandten Seite angeordnete Kammer 89 kann zur Ermöglichung der Bewegung des Steuerkolbens 10 entlüftet sein, beispielsweise durch geeignete Stichkanäle 90 des Steuerschiebers 77, welche in den Federraum 91 unterhalb des Steuerschiebers 77 münden, der auf nicht dargestellte Weise entlüftet ist. Von dem Anschluss 17 ist der Vorratsdruck über die Zweigleitung 20 (vgl. Fig. 6) durch die Seitenwand 57 geführt. Diese mündet in die obere Stirnseite der Seitenwand 57, wo der Vorratsdruck übergeben wird in eine Stichleitung 92, welche pneumatisch mit dem Einlasssitz 21, der von dem Deckel 58 ausgebildet ist, verbunden ist. Die dichte pneumatische Verbindung zwischen der Zweigleitung 20 und der Stichleitung 92 wird hergestellt mit der Verbindung des Deckels 58 mit dem Hauptgehäuse 49, wobei die Verbindungsstelle zwischen der Zweigleitung 20 und der Stichleitung 92 von einem weiteren Dichtelement 93 umgeben sein kann. Mit der Verbindung des Deckels 58 mit dem Hauptgehäuse 49 wird das Dichtelement 93 vorgespannt und unter Abdichtung sowohl gegen den Deckel 58 als auch gegen das Hauptgehäuse 49 gedrückt.

In Richtung der Längsachse 66 ist von oben in den Deckel 58 eine sacklochartige Ausnehmung 95 eingebracht, in welche das Magnetventil 3 einsetzbar ist. Beispielsweise kann das Magnetventil in eine mit einem Gewinde versehene Ausnehmung 95 eingeschraubt sein. Das Magnetventil 3 besitzt vorzugsweise einen Ventilkörper, welcher in einer Schließstellung zur abdichtenden Anlage an den Einlasssitz 21 kommt. Das Magnetventil 3 besitzt einen Auslasssitz 22 mit zugeordnetem Entlüftungsanschluss 8 entsprechend dem in den Fig. 1 und 2 dargestellten Ausführungsbeispiel. In den Figuren ist darüber hinaus ein standardisierter elektrischer Anschluss 94 zu erkennen, über welchen das Magnetventil 3 mit der Steuerleitung 5 elektrisch koppelbar ist. Ebenfalls möglich ist, dass eine Entlüftung sowohl des Federraums 91 als auch der Kammer 89 erfolgt über eine Bohrung 96 der Abstützhülse 78, die über einen Stichkanal 97 in der Seitenwand 57 mit dem Entlüftungsanschluss 15 und der Ausnehmung 59 verbunden ist.

Analog zu den Fig. 1 und 2 ist das Magnetventil 3 auf in den Figuren nicht dargestellte Weise mit dem Steuerraum 88 verbunden.

Der Entlüftungsanschluss 15 ist mit einem ebenfalls aus Kunststoff bestehenden kreisförmigen Deckel 98 mit in erster Näherung T-förmigem Querschnitt gebildet. Der Querschenkel des T verschließt hierbei die Ausnehmung 59 des Hauptgehäuses 49, wobei in den radial außenliegenden Randbereichen des Deckels 98 Rastelemente 99 oder ein umlaufender elastisch verformbarer Rastbund vorgesehen sind, über welche der Deckel 98 in geeignete Rastnuten des Hauptgehäuses 49 einrastbar ist, wobei auch andere, im Folgenden noch im Detail für den Deckel 58 erläuterte Verbindungstechniken für die Verbindung zwischen Deckel 98 und Hauptgehäuse 49 eingesetzt werden können. Ergänzende Dichtelemente können zwischen Deckel 98 und Hauptgehäuse 49 vorgesehen sein. Der Querschenkel des T des Deckels 98 besitzt mehrere Durchgangsbohrungen oder Schlitze 100, über welche die Entlüftung erfolgen kann. Der Vertikalschenkel des T, der in der in Fig. 6 dargestellten Einbausituation quer zur Längsachse 66 des Liftachsventils 2 orientiert ist, liegt an einem Entlüftungskörper 101 oder einer Entlüftungsmembran mittig an und stützt diesen in radialer Richtung ab. Der Entlüftungskörper 101 ist in erster Näherung T-förmig ausgebildet und rotationssymmetrisch zu dem Vertikalschenkel des T, wobei der Vertikalschenkel des T des Entlüftungskörper 101 passgenaue Aufnahme unter elastischer Vorspannung in einer radialen Bohrung 102 des Hauptgehäuses 49 findet, wodurch die Längsachse des Entlüftungskörpers 101 im Zusammenwirken mit dem Vertikalschenkel des T des Deckels 98 festgelegt ist. Der Querschenkel des T des Entlüftungskörpers 101 ist elastisch vorgespannt gegen einen Entlüftungsventilsitz 103. Liegt innenseitig an dem Entlüftungskörper 101 ein Druck an, wird der Querschenkel des T derart verformt, dass der Entlüftungskörper 101 von dem Entlüftungsventilsitz 103 weggedrückt wird und eine Entlüftung über die Schlitze 100 erfolgen kann.

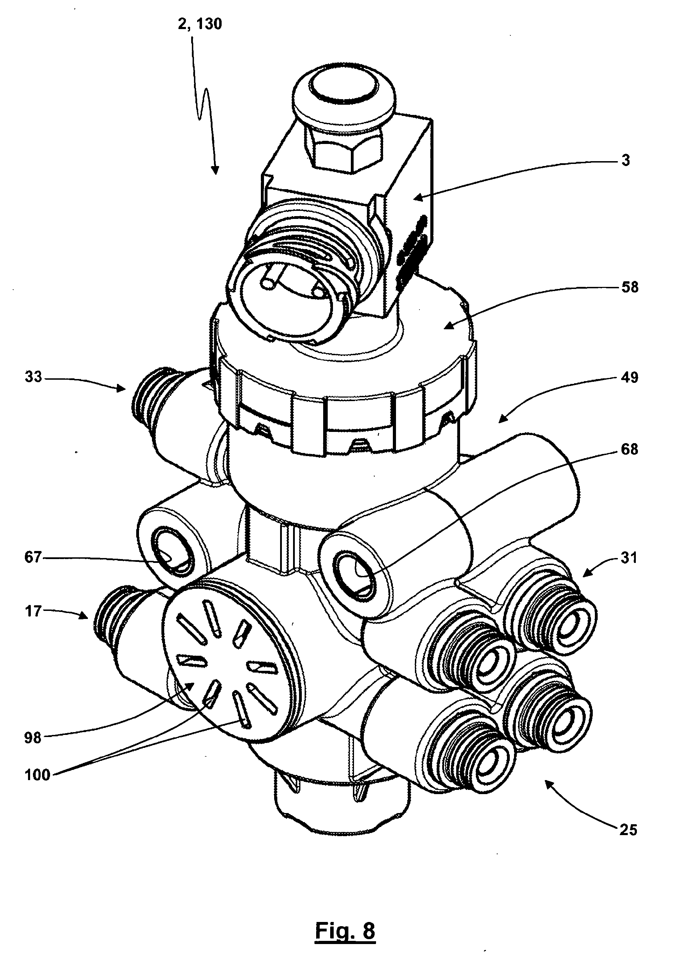

Je nach Zahl der anzuschließenden Leitungen und Bälge können die genannten Anschlüsse doppelt ausgebildet sein, wie dies in Fig. 8 zu erkennen ist. Ebenfalls möglich ist, dass abweichend zu Fig. 8 die jeweiligen Anschlüsse nur einzeln ausgebildet sind, aber außerhalb des Liftachsventils 2 ein T-Stück derart verwendet wird, dass an einem Anschluss mehrere Leitungen angeschlossen werden können.

Insbesondere der Deckel 58, das Hauptgehäuse 49, der Deckel 98, die Hülsen 74 und/oder der Steuerschieber 77 mit dem Steuerkolben 10 können aus Kunststoff hergestellt sein, wobei für die genannten Bauteile derselbe oder unterschiedliche Kunststoffe eingesetzt werden können. Möglich ist auch, dass in mindestens einem der genannten Bauteile ein faserverstärkter Kunststoff Einsatz findet, beispielsweise mit kurzen in dem Kunststoff verteilten Glasfasern. Derartige Kurzfasern können in dem Extruder dem Kunststoffmaterial, welches vorzugsweise granulatartig bereitgestellt wird, beigemischt werden.

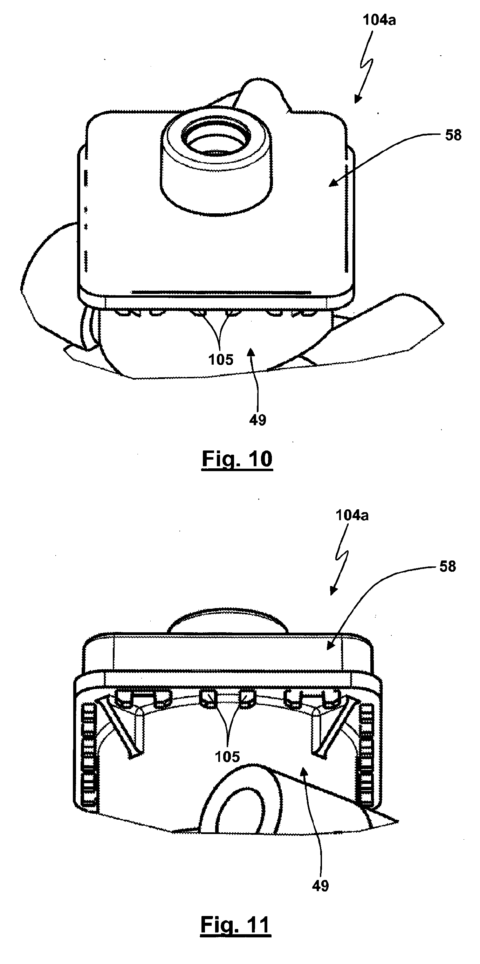

In den **Fig. 10 bis 17** sind unterschiedliche Verbindungseinrichtungen 104a, 104b, 104c, 104d für die Bauelemente aus Kunststoff dargestellt. Diese sind exemplarisch für die Verbindung zwischen Deckel 58 und Hauptgehäuse 49 dargestellt, wobei entsprechende Verbindungseinrichtungen ebenfalls für andere zu verbindende Bauelemente, insbesondere die Verbindung des Deckels 98 mit dem Hauptgehäuse 49, eingesetzt werden können.

Gemäß dem in Fig. 10 und 11 dargestellten Ausführungsbeispiel der Verbindungseinrichtung 104a besitzt der Deckel 58 über seinen Umfang verteilte, in Richtung der Längsachse 66 nach unten orientierte Rastelemente 105, welche mit einem elastischen Federarm sowie einer Rastnase ausgebildet sind. Die Rastelemente werden bei dem Aufstecken des Deckels 58 auf das Hauptgehäuse 49 in Umfangsrichtung verformt, indem die Rastnasen entlang von dem Hauptgehäuse 49 ausgebildeten Schrägen gleiten, was mit einer elastischen Verformung der Federarme in Umfangsrichtung einhergeht. Wird der Deckel 58 an die Stirnseite der Seitenwand 57 gepresst unter elastischer Beaufschlagung der Dichtelemente 51, 93, schnappen die Rastnasen in Rastnuten des Hauptgehäuses 49 ein.

Für eine abgewandelte, nicht dargestellte Ausführungsform können entsprechende Rastelemente eingesetzt werden, die allerdings in diesem Fall nicht in Umfangsrichtung, also entlang des Rands des Deckels 58 verformt werden, sondern radial nach außen. In diesem Fall treten die Rastnasen der Rastelemente 105 mit dem Einschnappen radial nach innen in Rastnuten des Hauptgehäuses 49 ein. Es versteht sich, dass in umgekehrter Ausbildung auch die Rastelemente 105 von dem Hauptgehäuse 49 ausgebildet sein können, während die zugeordneten Rastnuten in diesem Fall von dem Deckel 58 ausgebildet werden.

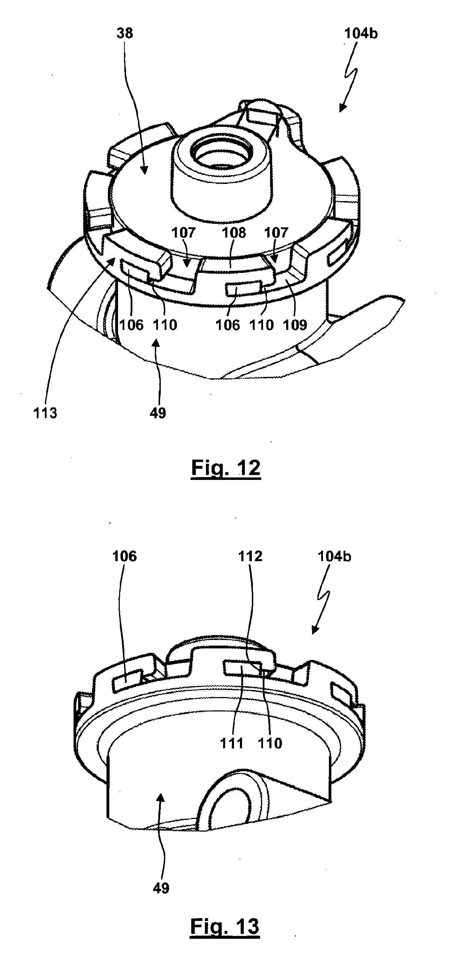

Für eine in den Fig. 12 und 13 dargestellte alternative Ausführungsform einer Verbindungseinrichtung 104b ist diese als eine Art Bajonett-Verbindung ausgebildet. In diesem Fall bildet der Deckel 58 radial nach außen orientierte, stegartige Flügel 106 aus. Diese Flügel können von oben in korrespondierende Vertiefungen 107 der oberen Stirnseite 108 des Hauptgehäuses 49 eingeführt werden, wobei mit dieser Einführbewegung bereits eine Beaufschlagung der Dichtelemente 81, 93 erfolgt. Kommen die Flügel 106 zur Anlage an einem Boden 109, der Vertiefungen 107, können die Flügel 106 für eine Rotationsbewegung des Deckels 58 um die Längsachse 66 in in Umfangsrichtung orientierte Schlitze 110 der Endbereiche der Seitenwand 57 des Hauptgehäuses 49 eintreten. Unter Umständen besitzen die Schlitze im Endbereich eine Erweiterung 111, so dass mit Bewegung der Flügel 106 bis in dem Bereich der Erweiterungen 111 der Deckel wieder angehoben werden kann. Eine Stufe 112 im Übergangsbereich von dem Schlitz 110 zu der Erweiterung 111 sichert dann den Deckel gegen ein unbeabsichtigtes Lösen, da das Lösen des Deckels erst möglich ist, wenn der Deckel 58 wieder geringfügig nach unten gedrückt wird. Vereinfacht gesagt bildet der Endbereich der Seitenwand 57 des Hauptgehäuses 49 Haken 113 aus, in welchen die Flügel 106 Aufnahme finden.

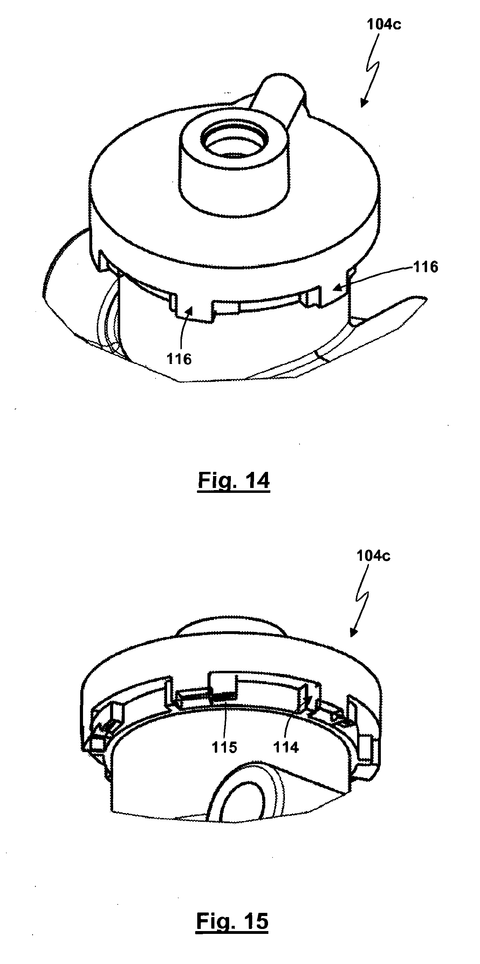

Für die Verbindungseinrichtung 104c, die in den Fig. 14, 15 dargestellt ist, ist ebenfalls eine Art Bajonett-Verbindung eingesetzt. Allerdings sind in diesem Fall an den Endbereich der Seitenwand 57 L-förmige Verbindungselemente 114 angeformt, wobei sich ein Schenkel des L in radialer Richtung erstreckt, während sich der andere Schenkel unter Ausbildung eines Spalts 115 gegenüber der Seitenwand 57 in Umfangsrichtung des Hauptgehäuses 49 erstreckt. In diesem Fall besitzt der Deckel 58 sich in Richtung des Hauptgehäuses 49 erstreckende Fortsätze 116, die sich bis unterhalb der Verbindungselemente 115 erstrecken, nach innen in Richtung der Seitenwand 57 abgewinkelt sind und mit einem Endbereich wieder nach oben erstrecken, so dass dieser Endbereich mit einer Verdrehung des Deckels 58 in den Spalt 115 eingeführt werden kann. Hierbei kommt der sich radial nach innen erstreckende Teil des Fortsatzes 116 von unten zur Anlage an das L-förmige Verbindungselement 114, womit der Deckel 58 gegen ein Abheben nach oben gesichert ist.

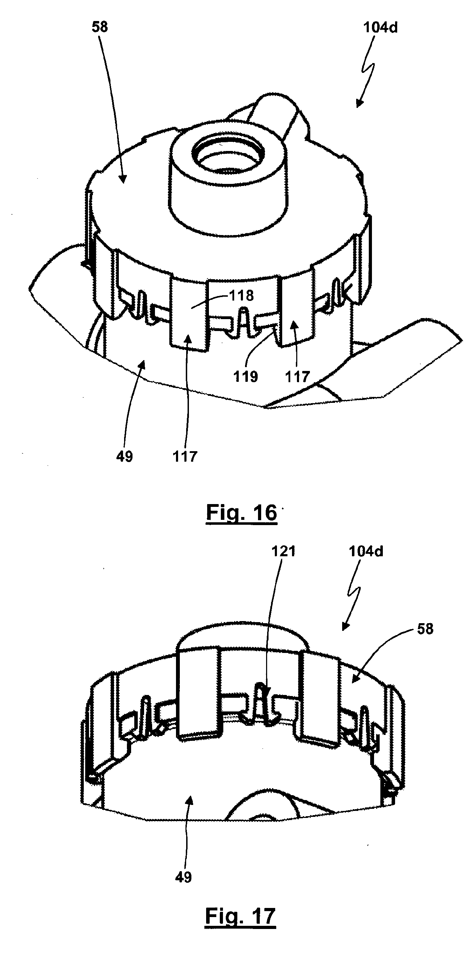

Schließlich zeigen die Fig. 16 und 17 ein Verbindungselement 114d, bei welchem der Deckel sich nach unten erstreckende Rastelemente 117 besitzt, die über elastische Federarme 118, die parallel zur Längsachse 66 orientiert sind, sowie sich radial nach innen erstreckende Rastnasen 119 verfügen. Wird der Deckel auf das Hauptgehäuse 49 aufgepresst, rastieren die Rastnasen 119 hinter einem entsprechenden Absatz 120 oder einer Rastnut des Hauptgehäuses 49. Somit wird über die Rastelemente 117 eine Rastierung in radialer Richtung bewirkt. Zusätzlich finden Rastelemente 121 Einsatz, welche ebenfalls mit Federarmen und Rastnasen gebildet sind. Hier wird eine Verriegelungs- oder Rastierwirkung allerdings herbeigeführt durch eine elastische Verformung der Federarme 118 in Umfangsrichtung und einen Eintritt der Rastnasen in in Umfangsrichtung orientierte Vertiefungen des Hauptgehäuses 49.

Das Liftachsventil findet vorzugsweise Einsatz für ein Nutzfahrzeug.

Für den Fall, dass für die Fertigung eines Bauelements ein Kunststoff eingesetzt wird, der mit Glasfasern verstärkt ist, ist dieses Bauelement vorzugsweise nicht spannabhebend oder schleifend nachbearbeitet. Auch ein Entgraten kann in diesem Fall vollständig entfallen. Die Radien und die Neigungswinkel der einzelnen Flächen der Bauelemente sind angepasst an das Spritzgießverfahren, so dass ein einfaches Ausheben aus einer Form ermöglicht ist. Entsprechendes gilt für die Ausbildung von Verrippungen und die Wahl der Wandstärken.

Die dargestellten Einsätze zur Bildung der Anschlüsse sind mit Metall oder Kunststoff, insbesondere Messing-Einsätzen ausgebildet, die eine umlaufende Nut aufweisen, in die ein Rastelement, welches von dem Hauptgehäuse 49 ausgebildet ist, einrasten.

Gegenüber einem aus dem vollen gefrästen Hauptgehäuse können erfindungsgemäß mit dem Einsatz eines Spritzgießverfahrens die Wandstärken des Hauptgehäuses 49 minimiert werden, so dass sich einerseits infolge des leichten eingesetzten Materials und andererseits infolge reduzierter Wandstärken ein u. U. drastisch reduziertes Gewicht ergibt.

Für aus dem Stand der Technik bekannte Liftachsventile war der Entlüftungsanschluss im Bereich der Bodenwand 56 des Liftachsventils 2 angeordnet. Dies gilt für die erfindungsgemäße Ausführungsform unter Umständen nicht, da sich in diesem Fall an der Bodenwand 56 die Unterseite der Druckfeder 85 abstützt, was vorzugsweise in dem dem Magnetventil 3 entgegengesetzten Endbereich erfolgt zwecks Ermöglichung der Verwendung der "Hülsentechnik" mit den Hülsen 74. Die Entlüftung ist für eine erfindungsgemäße Ausgestaltung auf die Seite verlagert, was grundsätzlich den Nachteil hat, dass eine Kontamination der Entlüftung 15 mit Schmutzpartikeln erfolgen kann. Im Gegensatz zu Ausführungsformen gemäß dem Stand der Technik ist die Sacklochbohrung 72 u. U. nicht als Durchgangsbohrung ausgebildet. Für den Stand der Technik war die Durchgangsbohrung mit Hinterschnitten ausgestattet, in welche dann die Dichtelemente der Steuerkanten eingetreten sind zwecks Überbrückung der Dichtelemente. Weiterhin hat in diese Hinterschnitte dann eine Bohrung eingemündet, die mit einem zugeordneten Anschluss verbunden war. In diesem Bereich haben sich für den Stand der Technik Grate ausgebildet, deren Entfernung einen erhöhten Aufwand erfordert hat. Ist ein derartiger Grat nicht vollständig entfernt worden, hat dies unter Umständen eine gravierende Beeinträchtigung der Funktion bis hin zu einem Bauteilversagen zur Folge gehabt.

Ergänzend kann ein radial umlaufender innerer Bund 122 des Deckels 58 als weitere Funktion den Stellweg des Steuerkolbens 10 begrenzen. Als weitere Funktion ist in dem Deckel 58 ein Kanal für die Zufuhr der Vorratsluft unter Zwischenschaltung des Magnetventils 3 gebildet.

Eine Fertigung der Ausnehmung für die Aufnahme des Magnetventils 3 in dem Deckel 58 kann unter Einsatz eines Schraubkerns erfolgen, der durch schraubende Bewegung entfernt wird und das fertig hergestellte Gewinde zurücklässt, in welches das Magnetventil 58 einschraubbar ist.

Möglich ist, dass das Liftachsventil 2 in Varianten mit vier, sechs oder sieben Anschlüssen gefertigt wird. Im einfachsten Fall besitzt das Liftachsventil 2 lediglich vier Anschlüssen, nämlich den Anschluss für den Tragbalg, den Liftbalg, das Niveauregelventil und die Vorratsleitung. Weitere Anschlüsse können dann über ein T-Stück realisiert werden. Ebenfalls möglich ist, dass ergänzende Anschlüsse vorgesehen sind.

Es kann auch dieselbe Form Einsatz finden und die Anpassung an die unterschiedliche Zahl der Anschlüsse erfolgt durch den Einsatz unterschiedlicher Kerne oder Teilkerne.

Das Dichtelement 81 kann auch einem Toleranzausgleich für sich aufsummierende Toleranzen des Ventilkörpers 73, insbesondere der Hülsen und der Dichtelemente, dienen. Schließlich kann das Dichtelement 81 auch für einen Ausgleich thermischer Expansionen zuständig sein.

Vorzugsweise ist die kegelstumpfförmige Sacklochbohrung 72 im Bereich der Hülsen 74 durchgehend ohne Stufe ausgebildet, so dass Hülsen 74 gleicher Durchmesser eingesetzt werden können. Auch in diesem Fall erfolgt der Ausgleich des sich über die Länge ändernden Durchmessers infolge der Konizität der Sacklochbohrung 72 durch die elastischen Dichtelemente 76, die unterschiedliche Durchmesser besitzen können, aber vorzugsweise baugleich sind und durch ihre Elastizität trotzt unterschiedlicher Durchmesser der Kontaktflächen, die von der Sacklochbohrung 72 bereitgestellt werden, die gewünschte Dicht- und Steuerkantenwirkung herbeiführen.

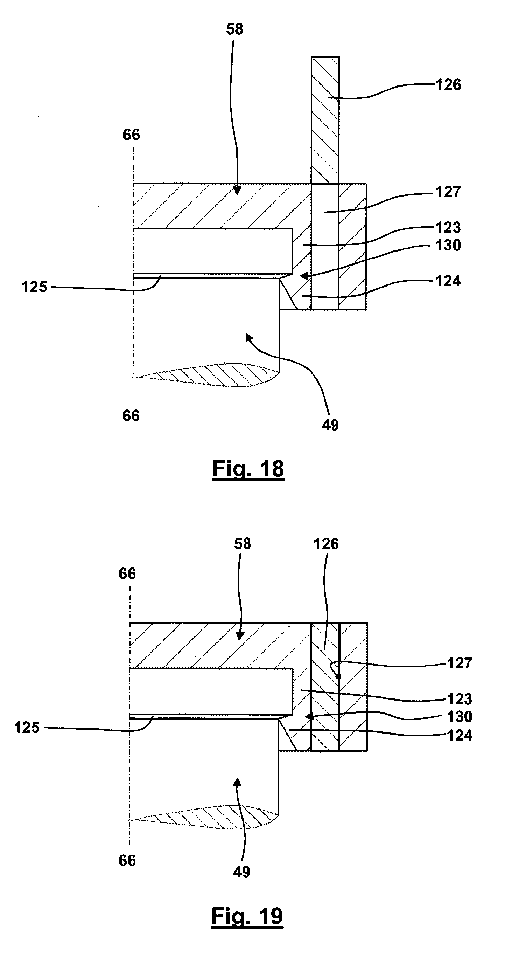

**Fig. 18 und 19** zeigen schematisch eine Verbindung zwischen einem Deckel 58 und einem Hauptgehäuse 49. Der Deckel 58 bildet hierbei mindestens einen Federarm 123 aus, dessen Endbereich eine radial nach innen hervortretende Rastnase 124 ausbildet. Mit dem Federarm 123 sowie der Rastnase 124 ist ein Rastelement 130 gebildet. In dem in Fig. 18 und 19 dargestellten verrasteten Zustand des Deckels 58 mit dem Hauptgehäuse 49 hintergreift die Rastnase 124 eine Stufe 125, welche auch Teil einer Rastausnehmung oder Rastnut des Hauptgehäuses 49 sein kann. Für das dargestellte Ausführungsbeispiel sind sowohl die Stufe 125 als auch die Rastnase nicht mit Kontaktflächen ausgebildet, die quer zur Längsachse 66 orientiert sind. Vielmehr sind die Kontaktflächen unter einem Winkel gegenüber der Querebene zur Längsachse 66 ausgebildet. Dies hat zur Folge, dass mit der Aufbringung von Kräften auf den Deckel 58, die in Richtung der Längsachse 66, aber weg von dem Hauptgehäuse 49 orientiert sind, im Bereich der Kontaktflächen zwischen Stufe 125 und Rastnase 124 Kraftkomponenten entstehen, welche die Rastnase 124 radial nach außen drücken. Somit gleitet die Rastnase 124 für hinreichende Demontagekräfte entlang der Stufe 125, wodurch eine Demontage ermöglicht ist. Die für eine derartige Demontage erforderlichen Demontagekräfte können konstruktiv vorgegeben werden insbesondere durch Gestaltung der radialen Steifigkeit des Federarmes 123 durch den Querschnitt und das Material des Federarms 124, die Vorgabe des Winkels der Kontaktflächen zwischen Stufe 125 und Rastnase 124, die Gestaltung der Reibung im Bereich der Kontaktflächen und die Erstreckung der Stufe 125 quer zur Längsachse 66. Ist eine derartige einfache Demontage durch alleinige Aufbringung von Demontagekräften nicht gewünscht, kann die Stufe 125 auch quer zur Längsachse 66 orientiert sein. In diesem Fall erfordert die Demontage des Deckels 58 von dem Hauptgehäuse 49 den Einsatz eines zusätzlichen Werkzeuges, mittels welchem die Rastnase 124 für die Demontage nach außen gespreizt wird. Zusätzlich bewirkt die Ausbildung der Stufe 125 sowie der Rastnase 124 mit einer Schräge wie in den Fig. 18 und 19 dargestellt, dass ein gewisser Toleranzausgleich erfolgen kann mit einer Vermeidung eines Spieles, wie dieses der Fall sein kann, wenn Stufe 125 und Rastnase 124 mit Kontaktflächen ausgebildet wären, die quer zur Längsachse 66 orientiert sind. Sowohl die Stufe 125 als auch die Rastnase 124 und der Federarm 123 können in Umfangsrichtung um die Längsachse 66 umlaufend ausgebildet sein oder lediglich in Teilumfangsbereichen angeordnet sein.

Gemäß dem Ausführungsbeispiel, welches in Fig. 18 und 19 dargestellt ist, findet nach erfolgter Montage des Deckels 58 mit dem Hauptgehäuse 49 und ggf. einer zusätzlichen Prüfung dieser Verbindung, insbesondere hinsichtlich der ordnungsgemäßen Montage und/oder der Dichtigkeit der Verbindung zwischen Deckel 58 und Hauptgehäuse 49 und/oder einer erweiterten Funktionsprüfung, ein Sicherungselement 126 Einsatz. Dieses behindert in der in Fig. 19 dargestellten gesicherten Stellung den elastischen Freiheitsgrad des Federarms 123 mit der Rastnase 124. Für das dargestellt Ausführungsbeispiel ist in dem Deckel 58 hierzu eine Ausnehmung 127 gebildet, welche in der nicht gesicherten Stellung des Sicherungselements 126 gemäß Fig. 18 einen Verformungsraum für das mit dem Federarm 123 und der Rastnase 124 gebildete Rastelement bildet. Die Ausnehmung 127 ist für das dargestellte Ausführungsbeispiel mit einer parallel zur Längsachse 66 orientierten Ausformung oder Bohrung oder einer parallel zur Längsachse 66 sowie in Umfangsrichtung um die Längsachse 66 orientierten Ausfräsung oder Ausformung ausgebildet, wobei das radial innen liegend von der Ausnehmung 127 verbleibende Material des Deckels 58 den Federarm 123 sowie die Rastnase 124 ausbildet. Das Sicherungselement 126 besitzt einen Querschnitt, der mit dem Querschnitt der Ausnehmung 127 korreliert, so dass das Sicherungselement 126 parallel zur Längsachse 66 in die Ausnehmung 127 einschiebbar ist. Hierbei kann zwischen Ausnehmung 127 und Sicherungselement 126 eine Spiel-, Übergangs- oder Presspassung ausgebildet sein. Ebenfalls möglich ist, dass die Seitenflächen der Ausnehmung 127 einerseits und des Sicherungselements 126 zueinander derart geneigt sind, dass mit zunehmendem Eintritt des Sicherungselements 126 in die Ausnehmung 127 die Einspannung des Sicherungselements 126 in der Ausnehmung 127 quer zur Längsachse 66 zunimmt, so dass auch Federarm 123 und Rastnase 124 zunehmend radial nach innen verpresst werden und die Rastverbindung gestärkt wird.

Einsatz finden können mehrere, über den Umfang verteilte Ausnehmungen 127, die jeweils mit einem Sicherungselement 126 in Wirkverbindung treten. Hierbei können die Sicherungselemente 126 einzeln eingesetzt werden. Ebenfalls möglich ist, dass die Sicherungselemente 126, beispielsweise in ihrem außen liegenden Endbereich, miteinander verbunden sind, beispielsweise über einen starren oder elastischen Verbindungsring, einen Draht oder Faden oder ähnliches. Möglich ist ebenfalls, dass eine zusätzliche Verbindung zur Sicherung des Sicherungselements 126 in der Ausnehmung 127 Einsatz findet, beispielsweise eine Montagepaste, eine stoffschlüssige Verbindung, beispielsweise mit einem adhäsiven Mittel, oder ähnliches.

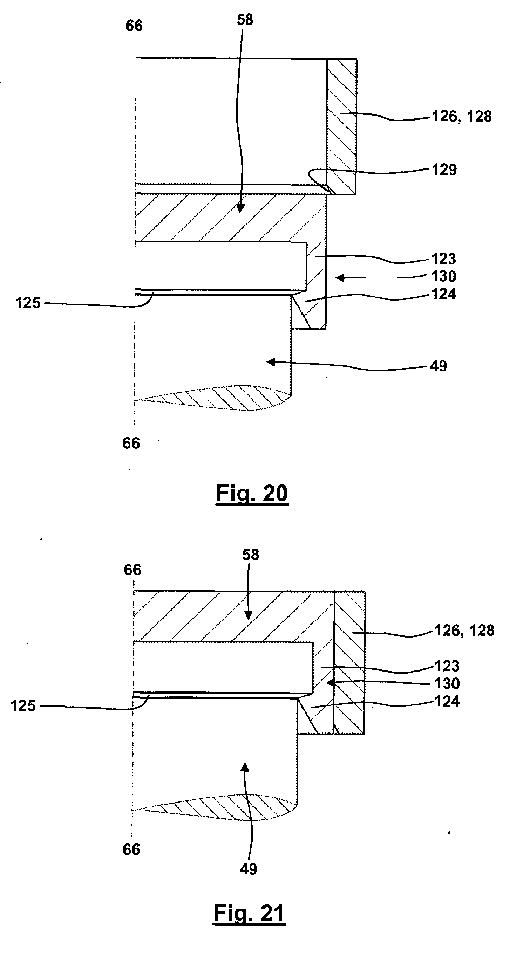

Für das in den **Fig. 20 und 21** dargestellte Ausführungsbeispiel gibt nicht eine Ausnehmung 127 den Verformungsweg für die Rastnase 124 und den Federarm 123 vor. Vielmehr bilden die Rastnase 124 sowie der Federarm 123 den sich nur in Teilumfangsbereichen oder in Umfangsrichtung umlaufenden seitlichen Rand des Deckelbereiches, welcher die Stufe 125 in montiertem Zustand des Deckels 58 mit dem Hauptgehäuse 49 übergreift. In diesem Fall ist das Sicherungselement 126 in Form eines umlaufenden, beispielsweise hohlzylinderförmigen Rings 128 ausgebildet, welcher in dem in Fig. 20 unteren Endbereich eine Einführschräge 129 ausbildet und von oben auf den Deckel 58 aufgeschoben werden kann, so dass der Ring 128 in der in Fig. 21 dargestellten gesicherten Stellung radial außen liegend den Deckel 58 umgibt unter Ausbildung eines Spiel-, Übergangs- oder Presspassung, ggf. auch unter Verwendung einer Art Keilverbindung wie zuvor erläutert oder Einsatz zusätzlicher Sicherungselemente, beispielsweise einer Verklebung.

### BEZUGSZEICHENLISTE

- 1: Luftfederungsanlage
- 2: Liftachsventil
- 3: Magnetventil
- 4: Steuereinheit
- 5: Steuerleitung
- 6: Magnet
- 7: Feder
- 8: Entlüftungsanschluss
- 9: Hauptgehäuse
- 10: Steuerkolben
- 11: Kolbenstange
- 12: Feder
- 13: Federraum
- 14: Kanal
- 15: Entlüftungsanschluss
- 16: Steuerraum
- 17: Anschluss
- 18: Vorratsbehälter
- 19: Versorgungsleitung
- 20: Zweigleitung
- 21: Einlasssitz
- 22: Auslasssitz
- 23: Ventilraum
- 24: Leitung
- 25: Anschluss
- 26: Leitung
- 27: Liftbalg
- 28: Liftachse
- 29: Stichkanal
- 30: Federbalg
- 31: Anschluss
- 32: Leitung
- 33: Anschluss
- 34: Leitung
- 35: Niveauregelventil
- 36: Leitung
- 37: Tragbalg
- 38: Tragachse
- 39: Signalleitung
- 40: Anschluss
- 41: Anschluss
- 42: 3/2-Wegeventil
- 43: 5/2-Wegeventil
- 44: Anschluss
- 45: Anschluss
- 46: Anschluss
- 47: Anschluss
- 48: Gehäuse
- 49: Hauptgehäuse
- 50: Gehäuseteil
- 51: Gehäuseteil
- 52: Teilungsebene
- 53: Grundschenkel
- 54: Seitenschenkel
- 55: Seitenschenkel
- 56: Bodenwand
- 57: Seitenwand
- 58: Deckel
- 59: Ausnehmung
- 60: Ausnehmung
- 61: Ausnehmung
- 62: Ausnehmung
- 63: Ausnehmung
- 64: Erweiterung
- 65: Erweiterung
- 66: Längsachse
- 67: Hülse
- 68: Hülse
- 69: Innenraum
- 70: Stufe
- 71: Stufe
- 72: Sacklochbohrung
- 73: Ventilkörper
- 74: Hülse
- 75: Nut
- 76: Dichtelement
- 77: Steuerschieber
- 78: Abstützhülse
- 79: Grundkörper
- 80: Bund
- 81: Dichtelement
- 82: Stufe
- 83: Steuernut
- 84: Steuernut
- 85: Druckfeder
- 86: Stirnseite
- 87: Dichtelement
- 88: Steuerraum
- 89: Kammer
- 90: Stichkanal
- 91: Federraum
- 92: Stichleitung
- 93: Dichtelement
- 94: elektrischer Anschluss
- 95: Ausnehmung
- 96: Bohrung
- 97: Stichkanal
- 98: Deckel
- 99: Rastelement
- 100: Schlitz
- 101: Entlüftungskörper
- 102: Bohrung
- 103: Entlüftungsventilsitz
- 104: Verbindungseinrichtung
- 105: Rastelement
- 106: Flügel
- 107: Vertiefung
- 108: Stirnseite
- 109: Boden
- 110: Schlitz
- 111: Erweiterung
- 112: Stufe
- 113: Haken
- 114: Verbindungselement
- 115: Spalt
- 116: Fortsatz
- 117: Rastelement
- 118: Federarm
- 119: Rastnase
- 120: Absatz
- 121: Rastelement
- 122: Bund
- 123: Federarm
- 124: Rastnase
- 125: Stufe
- 126: Sicherungselement
- 127: Ausnehmung
- 128: Ring
- 129: Einführschräge
- 130: Ventil
- 131: Innenfläche
- 132: Steuerraum
- 133: Durchgangsausnehmung

## Patentansprüche

1. Ventil (130), insbesondere Liftachsventil (2) oder Hebe-Senk-Ventil, für eine Druckluftanlage eines Nutzfahrzeugs mit einem Gehäuse (48) aus Kunststoff und mit einem Innenraum (69), in dem ein Steuerschieber (77) entlang einer Längsachse (66) verschiebbar geführt ist, wobei der Steuerschieber (77) in unterschiedlichen Stellungen unterschiedliche Verbindungen von Anschlüssen (17; 31; 33) miteinander und/oder mit einer Entlüftung (15) herstellt und/oder absperrt, **dadurch gekennzeichnet, dass**
a) der Innenraum (69) von einer kegelstumpfförmigen Innenfläche (131) des Gehäuses (48) begrenzt ist,
b) in den Innenraum (69) mit kegelstumpfförmiger Innenfläche (131) zumindest eine Hülse (74) eingesetzt ist, welche
ba) radial innenliegend mindestens einen Steuerraum (132) ausbildet, der über mindestens eine radiale Durchgangsausnehmung (133) der Hülse (74) mit mindestens einem radial außenliegend von der Hülse (74) angeordneten Anschluss (17; 31; 33) oder einer Entlüftung (15) verbunden ist, und
bb) radial außenliegend mit der kegelstumpfförmigen Innenfläche (131) einen Spalt mit in Richtung der Längsachse (66) des Steuerschiebers (77) veränderlicher Spalthöhe ausbildet,
c) an den Stirnseiten der mindestens einen Hülse (74) baugleiche Dichtelemente (76) abgestützt sind, die
ca) radial innenliegend mit dem Steuerschieber (77) in Wechselwirkung treten zur Abdichtung benachbarter Steuerräume (132) sowie
cb) radial außenliegend unter Abdichtung mit der kegelstumpfförmigen Innenfläche (131) des Gehäuses (48) in Wechselwirkung treten, wobei eine Elastizität der Dichtelemente (76) Durchmesserunterschiede infolge des Öffnungswinkels der kegelstumpfförmigen Innenfläche (131) ausgleicht.

2. Ventil (130) nach Anspruch 1, **dadurch gekennzeichnet, dass** zwei oder mehr Hülsen (74) eingesetzt sind, welche gleiche Durchmesser besitzen und zwischen die ein baugleiches Dichtelement (76) zwischengeordnet ist, wobei die Erstreckung der kegelstumpfförmigen Innenfläche (131) in Richtung der Längsachse (66) größer ist als die Summe der Erstreckungen der Hülsen (74) in Richtung der Längsachse (66).

3. Ventil (130) nach Anspruch 1 oder 2, **dadurch gekennzeichnet, dass** zwei oder mehr baugleiche Hülse (74) eingesetzt sind.

4. Ventil (130) nach einem der Ansprüche 1 bis 3, **dadurch gekennzeichnet, dass** der Kunststoff mit Fasern, insbesondere Glasfasern, verstärkt ist.

5. Ventil (130) nach einem der vorhergehenden Ansprüche, **dadurch gekennzeichnet, dass** das Gehäuse (48) mit
a) einem den Innenraum (69) mit der kegelstumpfförmigen Innenfläche (131) ausbildenden Hauptgehäuse (49), welches insbesondere in erster Näherung topfartig ausgebildet ist, und
b) mindestens einem das Hauptgehäuse (49) schließenden Deckel (58)
gebildet ist.

6. Ventil (130) nach Anspruch 5, **dadurch gekennzeichnet, dass** der Deckel (58) aus oder mit Kunststoff gebildet ist.

7. Ventil (130) nach Anspruch 5 oder 6, **dadurch gekennzeichnet, dass** eine Entlüftung (15) im Bereich einer Seitenwand (57) des Hauptgehäuses (49) vorgesehen ist.

8. Ventil (130) nach Anspruch 7, **dadurch gekennzeichnet, dass** die Entlüftung (15) mit einem Einsatz oder Deckel (98) aus Kunststoff gebildet ist, welcher mit einer seitlichen Ausnehmung (59) des Hauptgehäuses (49) verbindbar oder in diese einsetzbar ist.

9. Ventil (130) nach einem der vorhergehenden Ansprüche, **dadurch gekennzeichnet, dass** der Öffnungswinkel des Kegelstumpfes der Innenfläche (131) zwischen 0,1° und 2,0°, bspw. zwischen 0,2° und 1,0°, beträgt.

10. Ventil (130) nach einem der Ansprüche 5 bis 9, **dadurch gekennzeichnet, dass** der Innenraum (69) mit einem Kernschieber hergestellt ist, während mindestens ein quer zu der Längsachse gebildeter Anschluss (17; 31; 33) und/oder eine Entlüftung (15) mit einem Zusatzkern ausgeformt ist, der einen Vorsprung besitzt zur Ausformung mindestens einer Rastierausnehmung in Form einer Hinterschneidung, wobei eine Dimensionierung der Wandstärken des Hauptgehäuses (49), eine Wahl der Steifigkeit des Kunststoffmaterials und eine Dimensionierung des mindestens einen Vorsprungs derart erfolgt, dass der Zusatzkern über ein Zwangsentformen aus dem erstarrten Kunststoff entfernbar ist.

11. Ventil (130) nach einem der Ansprüche 5 bis 10, **dadurch gekennzeichnet, dass** der Deckel (58) das Hauptgehäuse (49) verschließt und den Innenraum (131) begrenzt.

12. Ventil (130) nach einem der Ansprüche 5 bis 11, **dadurch gekennzeichnet, dass** der Deckel (58) eine Aufnahme für ein Magnetventil (3) aufweist.

13. Ventil (130) nach Anspruch 12, **dadurch gekennzeichnet, dass** der Deckel (58) einen Ventilsitz (22) ausbildet.

14. Ventil (130) nach einem der Ansprüche 5 bis 13, **dadurch gekennzeichnet, dass** der Deckel (58; 98) ohne Einsatz metallischer Schraubverbindungselemente mit dem Hauptgehäuse (49) verbunden ist.

15. Ventil (130) nach Anspruch 14, **dadurch gekennzeichnet, dass** der Deckel (58; 98) auf das Hauptgehäuse (49) aufgeklipst oder mit diesem über eine Rastverbindung verbunden ist.

16. Ventil (130) nach Anspruch 14, **dadurch gekennzeichnet, dass** der Deckel (58; 98) über eine Bajonett-Verbindung mit dem Hauptgehäuse (49) verbunden ist.

17. Ventil (130) nach einem der Ansprüche 5 bis 16, **dadurch gekennzeichnet, dass** über den Deckel (58; 98) eine axiale Sicherung und/oder axiale Vorspannung der Hülsen (74) und/oder der Dichtelemente (76), die zwischen die Hülsen (74) zwischengeordnet sind, erfolgt.

18. Ventil (130) nach einem der Ansprüche 5 bis 17, **dadurch gekennzeichnet, dass** zwischen dem Deckel (58) und dem Hauptgehäuse (49) ein Dichtelement (81) elastisch verspannt ist, welches neben der Abdichtung zwischen dem Deckel (58) und dem Hauptgehäuse (49) der axialen Sicherung und/oder axialen Vorspannung der Hülsen (74) und der Dichtelemente (76), die zwischen die Hülsen (74) zwischengeordnet sind, dient.

## Claims

1. Valve (130), in particular lift axle valve (2) or valve for lifting and lowering, for a pressurized air system of a utility vehicle comprising a housing (48) made of plastic and comprising an inner space (69) wherein a sliding valve body (77) is displaceably guided along a longitudinal axis (66), wherein the sliding valve body (77) in its different positions provides and/or blocks different connections of ports (17; 31; 33) with each other and/or with a vent (15), wherein
a) the inner space (69) is limited by an inner surface (131) of the housing (48) having the shape of a truncated cone,
b) at least one sleeve (74) is inserted into the inner space (69) having the inner surface (131) formed by the truncated cone, wherein the sleeve (74)
ba) radially inside forms at least one control chamber (132) which is connected by at least one radial through recess (133) of the sleeve (74) with at least one port (17; 31; 33) located radially outside from the sleeve (74) or with a vent (15), and
bb) radially outside forms a gap with the inner surface (131) having the shape of a truncated cone wherein the gap has a height changing in the direction of the longitudinal axis (66) of the sliding valve body (77),
c) sealing elements (76) of the same construction are supported at the faces of the at least one sleeve (74), wherein the sealing elements (76)
ca) radially inside cooperate with the sliding valve body (77) for sealing neighboring control chambers (132) and
cb) radially outside sealingly cooperate with the inner surface (131) of the housing (48) having the shape of a truncated cone, wherein an elasticity of the sealing elements (76) compensates differences of the diameter which are due to the opening angle of the inner surface (131) having the shape of a truncated cone.

2. Valve (130) of claim 1, wherein two or more sleeves (74) are used each having the same diameter wherein a sealing element (76) of the same construction is interposed between the sleeves, wherein the extension of the inner surface (131) having the shape of a truncated cone in the direction of the longitudinal axis (66) is larger than the sum of the extensions of the sleeves (74) in the direction of the longitudinal axis (66).

3. Valve (130) of claim 1 or 2, wherein two or more sleeves (74) having the same construction are used.

4. Valve (130) of one of claims 1 to 3, wherein the plastic material is reinforced by fibres, in particular glass fibres.

5. Valve (130) according to one of claims 1 to 4, wherein the housing (48) is built with
a) a main housing (49) forming the inner space (69) with the inner surface (131) having the shape of a truncated cone, wherein the main housing (49) is in particular in a first approximation formed pot-like, and
b) at least one cover (58) closing the main housing.

6. Valve (130) according to claim 5, wherein the cover (58) is built by or with plastic.

7. Valve (130) according to claim 5 or 6, wherein a vent (15) is provided in the region of a side wall (57) of the main housing (49).

8. Valve (130) of claim 7, wherein the vent (15) is built with an insert or cover (98) made of plastic, wherein the insert or cover (98) is connectable with or insertable into a lateral recess (59) of the main housing (49).

9. Valve (130) according to one of claims 1 to 8, wherein the opening angle of the truncated cone of the inner surface (131) is between 0,1° and 2,0°, e.g. between 0,2° and 1,0°.

10. Valve (130) according to one of claims 5 to 9, wherein the inner space (69) is manufactured or molded with a movable core or core mover whereas at least one port (17; 31; 33) being formed transverse to the longitudinal axis and/or a vent (15) is formed by an additional core having a protrusion for forming at least one latching recess in the shape of an undercut or reverse taper, wherein the wall thicknesses of the main housing (49) are dimensioned such that, a stiffness of the plastic material is chosen such that and the at least one protrusion is dimensioned such that it is possible to remove the additional core by a forced removal from the mold out of the solidified plastic material.

11. Valve (130) according to one of claims 5 to 10, wherein the cover (58) closes the main housing (49) and limits the inner space (131).

12. Valve (130) according to one of claims 5 to 11, wherein the cover (58) comprises an accommodation for a magnet valve or solenoid valve (3).

13. Valve (130) according to claim 12, wherein the cover (58) forms a valve seat (22).

14. Valve (130) according to one of claims 5 to 13, wherein the cover (58; 98) is connected with the main housing (49) without use of any screwed connecting elements made of metal.

15. Valve (130) of claim 14, wherein the cover (58; 98) is latched with or upon the main housing (49) or connected with the main housing (49) by a latching connection.

16. Valve (130) of claim 14, wherein the cover (58; 98) is connected with the main housing (49) by a bayonet-connection.

17. Valve (130) according to one of claims 5 to 16, wherein an axial securing and/or an axial pretension or bias of the sleeves (74) and/or the sealing elements (76) interposed between the sleeves (74) is provided by the cover (58; 98).

18. Valve (130) according to one of claims 5 to 17, wherein a sealing element (81) is elastically biased between the cover (58) and the main housing (49), wherein the sealing element (81) besides the provision of a sealing between the cover (58) and the main housing (49) serves for the axial securing and/or axial bias or pretension of the sleeves (74) and the sealing elements (76) interposed between the sleeves (74).

## Revendications

1. Soupape (130), en particulier soupape d'essieu relevable (2) ou soupape de levage et d'abaissement, pour une installation à air comprimé d'un véhicule utilitaire comprenant un logement (48) en matière plastique et comprenant un espace intérieur (69) dans lequel un distributeur à tiroir (77) est guidé de façon à pouvoir coulisser le long d'un axe longitudinal (66), étant entendu que le distributeur à tiroir (77) réalise et/ou bloque, dans différentes positions, différentes combinaisons de raccordements (17 ; 31 ; 33) entre elles et/ ou avec une mise à l'air (15), **caractérisée :**
a) **en ce que** l'espace intérieur (69) est délimité par une surface intérieure en forme de cône tronqué (131) du logement (48) ;
b) **en ce que** dans l'espace intérieur (69) ayant une surface intérieure en forme de cône tronqué (131) est installée au moins une douille (74), laquelle
ba) forme en position radiale à l'intérieur au moins un espace de commande (132) qui est relié, par le biais d'au moins un évidement passant radial (133) de la douille (74), avec au moins un raccordement (17 ; 31 ; 33) agencé en position radiale à l'extérieur de la douille (74) ou avec une mise à l'air (15) ; et
bb) forme en position radiale à l'extérieur, avec la surface intérieure en forme de cône tronqué (131), une fente ayant une hauteur de fente variable dans la direction de l'axe longitudinal (66) du distributeur à tiroir (77) ;
c) **en ce que** sur les côtés frontaux de l'au moins une douille (74) prennent appui des éléments d'étanchéité de construction identique (76), lesquels
ca) entrent en interaction en position radiale à l'intérieur avec le distributeur à tiroir (77) afin d'étanchéifier les espaces de commande (132) adjacents ; et
cb) entrent en interaction en position radiale à l'extérieur avec la surface intérieure en forme de cône tronqué (131) du logement (48), étant entendu qu'une élasticité des éléments d'étanchéité (76) compense des différences de diamètre dues à l'angle d'ouverture de la surface intérieure en forme de cône tronqué (131).

2. Soupape (130) selon la revendication 1, **caractérisée en ce que** deux douilles (74) ou davantage sont installées, lesquelles présentent un même diamètre et entre lesquelles est agencé un élément d'étanchéité de construction identique (76), étant entendu que l'extension de la surface intérieure en forme de cône tronqué (131) dans la direction de l'axe longitudinal (66) est plus grande que la somme des extensions des douilles (74) dans la direction de l'axe longitudinal (66).

3. Soupape (130) selon la revendication 1 ou 2, **caractérisée en ce que** deux douilles (74) ou davantage de construction identique sont installées.

4. Soupape (130) selon l'une des revendications 1 à 3, **caractérisée en ce que** la matière plastique est renforcée au moyen de fibres, en particulier de fibres de verre.

5. Soupape (130) selon l'une des revendications précédentes, **caractérisée en ce que** le logement (48) est réalisé avec :
a) un logement principal (49) formant l'espace intérieur (69) avec la surface intérieure en forme de cône tronqué (131), qui est en particulier réalisé en première approximation en forme de pot, et
b) au moins un couvercle (58) fermant le logement principal (49).

6. Soupape (130) selon la revendication 5, **caractérisée en ce que** le couvercle (58) est réalisé en matière plastique ou comprend une matière plastique.

7. Soupape (130) selon la revendication 5 ou 6, **caractérisée en ce qu'**une mise à l'air (15) est prévue dans la zone d'une paroi latérale (57) du logement principal (49).

8. Soupape (130) selon la revendication 7, **caractérisée en ce que** la mise à l'air (15) est réalisée avec un élément rapporté ou un couvercle (98) en matière plastique qui peut être relié avec un évidement latéral (59) du logement principal (49) ou introduit dans celui-ci.

9. Soupape (130) selon l'une des revendications précédentes, **caractérisée en ce que** l'angle d'ouverture du cône tronqué de la surface intérieure (131) est compris entre 0,1° et 2,0°, par exemple entre 0,2° et 1,0°.

10. Soupape (130) selon l'une des revendications 5 à 9, **caractérisée en ce que** l'espace intérieur (69) est réalisé avec un tiroir à noyau, tandis qu'au moins un raccordement (17 ; 31 ; 33) formé transversalement à l'axe longitudinal et/ou une mise à l'air (15) est formé avec un noya supplémentaire qui comprend une saillie de façon à former au moins un évidement d'enclenchement ayant la forme d'une contre-dépouille, étant entendu qu'un dimensionnement des épaisseurs de parois du logement principal (49), un choix de la rigidité du matériau plastique et un dimensionnement de l'au moins une saillie sont effectués de telle sorte que le noyau supplémentaire peut être enlevé par une éjection forcée de la matière plastique durcie.

11. Soupape (130) selon l'une des revendications 5 à 10, **caractérisée en ce que** le couvercle (58) ferme le logement principal (49) et délimite l'espace intérieur (131).

12. Soupape (130) selon l'une des revendications 5 à 11, **caractérisée en ce que** le couvercle (58) présente une réception pour une soupape magnétique (3).

13. Soupape (130) selon la revendication 12, **caractérisée en ce que** le couvercle (58) forme un siège de soupape (22).

14. Soupape (130) selon l'une des revendications 5 à 13, **caractérisée en ce que** le couvercle (58 ; 98) est relié avec le logement principal (49) sans utiliser d'éléments de raccordement vissé métalliques.

15. Soupape (130) selon la revendication 14, **caractérisée en ce que** le couvercle (58 ; 98) est clipsé sur le logement principal (49) ou relié avec celui-ci au moyen d'une fixation à encliquetage.

16. Soupape (130) selon la revendication 14, **caractérisée en ce que** le couvercle (58 ; 98) est relié avec le logement principal (49) au moyen d'un raccordement à baïonnette.

17. Soupape (130) selon l'une des revendications 5 à 16, **caractérisée en ce qu'**une fixation axiale et/ou une précontrainte axiale des douilles (74) et/ou des éléments d'étanchéité (76) qui sont agencés entre les douilles (74) est réalisée au moyen du couvercle (58 ; 98).

18. Soupape (130) selon l'une des revendications 5 à 17, **caractérisée en ce qu'**un élément d'étanchéité (81) est tendu de façon élastique entre le couvercle (58) et le logement principal (49), lequel élément sert également, outre à l'étanchéité entre le couvercle (58) et le logement principal (49), à la fixation axiale et/ou à la précontrainte axiale des douilles (74) et des éléments d'étanchéité (76) qui sont agencés entre les douilles (74).
